# EUROPEAN PATENT SPECIFICATION

(11) **EP 4 277 772 B1**
(45) Date of publication and mention of the grant of the patent: **08.01.2025**
(21) Application number: 21844790.2
(22) Date of filing: 30.12.2021
(51) Int. Cl.: B27N 9/00, C09K 21/04, B27N 3/00, B27N 3/02, B27N 3/04, B27N 7/00

(54) **FLAME-RETARDANT AND SMOKE-SUPPRESSANT FORMULATION AND CELLULOSIC MATERIALS COMPRISING THE SAME**
FLAMMHEMMENDE UND RAUCHUNTERDRÜCKENDE FORMULIERUNG UND CELLULOSEMATERIALIEN DAMIT
FORMULATION IGNIFUGE ET RETARDATRICE DE FUMÉES ET MATÉRIAUX CELLULOSIQUES LA COMPRENANT

(30) Priority: 18.01.2021 EP 21382032
(43) Date of publication of application: 22.11.2023
(73) Proprietor: FORESA TECHNOLOGIES, S.L.U., 36650 Caldas de Reis Pontevedra (ES)
(72) Inventor: CASAS PÉREZ, José Manuel, 36650 Caldas de Reis (PONTEVEDRA) (ES)
(74) Representative: Balder IP Law, S.L.
(86) International application number: PCT/EP2021/087866
(87) International publication number: WO 2022/152574

(56) References cited:
- US-A1- 2004 094 279
- US-A1- 2008 099 735
- US-B1- 6 613 391

## Description

### TECHNICAL FIELD

The present invention relates to a water-based flame-retardant and smoke-suppressant formulation comprising a phosphate derivative, aluminum hydroxide, a clay and a surfactant; to a method for its preparation; to a cellulosic material comprising the same; to a method of preparation of such cellulosic materials and to cellulosic materials obtained by or obtainable by such method. The present invention further relates to the use of said water-based flame-retardant and smoke-suppressant formulation and to a method thereof for the management of wildland fires.

### STATE OF THE ART

In order to reduce the risk of the occurrence of fire and the consequences of fire occurrence (such as smoke generation and/or heat damage), construction materials as well as materials and products for industrial and/or domestic use, are commonly provided with flame-retardants. Furthermore, risk of fire and its consequences has led countries to establish strict laws regarding the use of materials for domestic purposes or in the public sector. Such laws regulate construction materials and materials and products for industrial and/or domestic use, including materials used in the production of items as varied as automobiles, rugs, children's pajamas, mattresses, as well as in structures in theaters, hospitals, skyscrapers, etc.

However, different materials have different properties and different responses or response mechanisms in front of a flame or a heat source. Also, requirements on fire resistance depend on their final application.

Accordingly, different flame-retardants have been explored to optimize flame-retardant properties for specific materials.

As a mode of example WO 2013/093139 A1 describes a hierarchically ordered inorganic phosphate structures on phyllosilicates and a method for obtaining hierarchically ordered inorganic phosphate structures on phyllosilicates, as well as their use as a flame-retardant additive for polymers.

Cellulosic materials have also been studied in particular. For instance, reference can be made to EP 2 995 671 A1 which relates to a fire-retardant board, which comprises a cellulose-containing material, a binding agent and fire retardants, characterized in that the binding agent is a melamine-based binding agent, and that the fire retardants consist at least of a phosphorus-based salt and magnesium sulfate.

United States Patent Application Publication no. US 2012/0316269 A1 relates to a method for production of wood material articles containing wood containing elements and an organic resin binder system, wherein the wood containing elements are treated with an aqueous composition comprising at least a reaction product (MAPP) of melamine or urea with an ammonium polyphosphate, before being mixed with the organic binder system.

US6613391 discloses a flame retardant formulation comprising hydroxyethylcellulose, water, urea, melamine, glycerol, and starch, cellulose, ammoniumpolyphosphate, aluminum hydroxide, aluminum trioxide, silicone dioxide, titanium dioxide, zirconium dioxide, kaolin, and glass powder (Example 1-1).

However, cellulosic materials are particularly problematic due to smoke production under fire. Accordingly, there is a need for compositions which alongside flame-retardant properties also have satisfactory smoke-suppression properties, e.g., when provided to the cellulosic materials.

Furthermore, some traditionally used flame retardants (e.g., boric acid, borax, halogenated compounds such as brominated compounds) have been phased-out due to environmental and health issues associated to their use.

As an alternative to such traditional flame retardants, zinc borate has been used in the art. Zinc borate is known to act as a synergist in conjunction with halogenated compounds, so that lower loadings of halogenated flame-retardant additives are needed. Zinc borate compositions also show a strong synergic effect with antimony trioxide; the synergic effect is enhanced in presence of aluminum hydroxide Al(OH)₃ (also referred to in the art as alumina trihydrate, Al₂O_{3•}3H₂O, or as ATH). Zinc borate is primarily used as a flame retardant in plastics but also for cellulose fibers, paper, rubbers and textiles. It is also used in paints, adhesives, and pigments. As a flame retardant, it can replace antimony trioxide as a synergist in both halogen-based and halogen-free systems. It is an anti-dripping and char-promoting agent, and suppresses the afterglow. In electrical insulator plastics it suppresses arcing and tracking. In halogen-containing systems, zinc borate is used together with antimony trioxide and alumina trihydrate. It catalyzes formation of char and creates a protective layer of glass. Zinc catalyzes the release of halogens by forming zinc halides and zinc oxyhalides.

As a mode of example, United States Patent no. 5,472,644 A describes zinc borate compositions having a ZnO:B₂O₃ ratio of 4:1. The hydrated zinc borate 4ZnO.B₂O₃.H₂O and anhydrous zinc borate 4ZnO.B₂O₃ are described to be especially useful as fire-retardants and smoke-suppressant additives for polymeric compositions.

Nonetheless, there is a need for further formulations for obtaining the desired flame-retardant and smoke-suppression properties without using components which are known to be harmful.

Fire retardants are also a tool in the fight against wildfires and are typically used in wildland fire management. However, the requirements on fire retardants for use in wildland fire management can be very stringent. For instance, in addition to good fire-retardant properties, formulations used in wildland fire management need to be visible when applied aerially. As a mode of example WO 96/03477 describes a fugitive color fire retardant composition which improves its aerial visibility but which fades after application. Other requirements for such fire retardant compositions are to adhere to the vegetation they are to protect, to have good drop characteristics and to be acceptable from an environmental point of view.

### SUMMARY OF THE INVENTION

An object of the present invention is to provide a flame retardant and at the same time a smoke suppressant formulation which can be satisfactorily used for, e.g., cellulosic materials.

In particular, a first aspect of the invention relates to a water-based flame-retardant and smoke-suppressant formulation comprising a phosphate derivative, aluminum hydroxide, a clay, and a surfactant. More in particular, a water-based flame-retardant and smoke suppressant formulation as described herein comprises water:
a) from 40 to 98.89 wt.% of a phosphate derivative selected from monoammonium phosphate (MAP), diammonium phosphate (DAP) and ammonium polyphosphate;
b) from 1 to 45 wt.% of aluminum hydroxide;
c) from 0.1 to 5 wt.% of a clay;
   and
d) from 0.01 to 10 wt.% of a surfactant selected from non-ionic surfactants or anionic surfactants,

the weight percentages of each component a), b) c) and d), based on the total combined weight amount of components a), b), c), and d),
said formulation having
   i) a solids content from 50 to 75 wt.%, based on the total weight of the formulation.

A formulation described herein may typically be a dispersion and, in particular, a dispersion having a Sauter diameter from 0.5 to 3 microns.

Further aspects of the invention relate to a method for preparing a water-based flame-retardant formulation as described herein, the method comprising:
A) adding to and mixing in water a phosphate derivative (a) selected from monoammonium phosphate (MAP), diammonium phosphate (DAP) and ammonium polyphosphate (APP) to provide a solution of the phosphate derivative in water;
B) adding and mixing to the solution of the phosphate derivative in water a clay (b); aluminum hydroxide (c); and a surfactant (d) selected from non-ionic and ionic surfactants, wherein mixing is performed under high-shear, to provide the water-based flame-retardant formulation.

Further aspects of the invention relate to a process for manufacturing a cellulosic material comprising applying a formulation as described herein onto a cellulosic substrate, to a cellulosic material obtainable by such a process, and to a cellulosic material comprising a cellulosic substrate and a formulation as described herein.

The formulations and methods described have been found to satisfactorily combine flame-retardant and smoke-suppression properties. Furthermore, such formulations (e.g., in the form of a dispersion) have been generally found to be stable, making them particularly suitable for industrial applicability. Furthermore, it has been found that formulations described herein may also provide cellulosic materials which comply with ever more demanding regulatory standards. For instance, cellulosic substrates treated with formulations as described herein (i.e., cellulosic materials as described herein) may have a fire class C or B and smoke production class S2 or S1 according to the European standard EN 13501 (in particular EN 13501-1:2007+A1:2010 also referred herein simply as EN 13501). Cellulosic substrates treated with formulations as described herein may alternatively or additionally have a M1 fire-resistance rating according to the Spanish standard UNE 23-721-90 or the equivalent French standard NF P92-501. Cellulosic substrates treated with formulations as described herein may alternatively or additionally have a fire class C or B and a smoke production class S2 or S1 according to ISO 5660-1:2015.

Cellulosic substrates treated with formulations as described herein may alternatively or additionally have smoke-suppressant properties according to ISO 5659-2:2017 characterized by a Ds4 of less than 250, in particular of less than 200 and more in particular of less than 150; and/or a VOF4 of less than 500, in particular less than 400 and more in particular less than 300.

Formulations described herein have also been found to satisfactorily combine flame-retardant and smoke-suppression properties in wildland vegetation which has been found useful for the management of wildland fires. Accordingly, the present invention further relates to the use of a water-based flame-retardant and smoke-suppressant formulation as described herein) and to a method thereof for the management (e.g., prevention, control and/or extinction) of wildland fires.

These and other advantages of the invention are further discussed in the detailed description of the invention.

### BRIEF DESCRIPTION OF THE DRAWINGS

To complete the description and in order to provide for a better understanding of the invention, a set of drawings is provided. Said drawings form an integral part of the description and illustrate embodiments of the invention, which should not be interpreted as restricting the scope of the invention, but just as examples of how the invention can be carried out. The drawings comprise the following figures:
Figure 1: weight over time curve of the combustion of forest fuel, untreated and treated with a water-based flame-retardant and smoke suppressant formulation F as described in the examples or with water, after 30 minutes at 42 °C (A) and after 90 minutes at 42 °C (B).
Figure 2: weight over time curve of the combustion of forest fuel, untreated and treated with a water-based flame-retardant and smoke suppressant formulation G as described in the examples or with water, after 30 minutes at 42 °C (A) and after 90 minutes at 42 °C (B).

### DETAILED DESCRIPTION OF THE INVENTION

As indicated above the instant invention relates to a water-based flame-retardant and smoke suppressant formulation.

A formulation as described herein is a flame-retardant and smoke-suppressant formulation. This means that the formulation confers flame-retardant and smoke-suppressant properties. More in particular, a formulation as described herein has been found to suitably provide cellulosic materials with improved flame-retardant and smoke suppressant properties as elucidated in more detail below.

A formulation as described herein comprises water and:
a) from 40 to 98.89 wt.% of a phosphate derivative selected from monoammonium phosphate (MAP), diammonium phosphate (DAP) and ammonium polyphosphate (AAP);
b) from 1 to 45 wt.% of aluminum hydroxide;
c) from 0.1 to 5 wt.% of a clay;
   and
d) from 0.01 to 10 wt.% of a surfactant selected from non-ionic surfactants and anionic surfactants,
the weight percentages of each component a), b), c) and d), based on the total combined weight amount of components a), b), c) and d).

A combination of components as described herein has been surprisingly found to combine good flame-retardant and smoke-suppressant properties, in particular when applied to cellulosic substrates. Even if some of such components may be known independently for their flame retardant and/or smoke-suppressant properties, they have now been successfully formulated as a water-based formulation and found to satisfactorily confer flame-retardant and smoke-suppressant properties to cellulosic materials provided with the same. Water-based formulations as described herein (e.g., in the form of a dispersion) have also been generally found to be stable for industrial applicability.

Component a) is a phosphate derivative selected from monoammonium phosphate (MAP), diammonium phosphate (DAP) and ammonium polyphosphate (APP).

The phosphate derivative confers flame-retardant properties to the formulation. Phosphate derivatives also can prevent afterglow.

The phosphate derivative is present in an amount from 40 to 98.89 wt.% and may be particularly present in an amount from 50 to 94 wt.%, more in particular from 60 to 93 wt.%, yet more in particular from 80 to 90 wt.%.

In several embodiments the phosphate derivative is a combination of MAP and DAP. For instance, in several specific embodiments, the phosphate derivative may consist of 2 weight parts of MAP and 3 parts of DAP. A combination of MAP and DAP has been found to be preferred as it allows obtaining a higher amount of solubilized phosphate derivative, than when each of the salts are used independently.

In other embodiments the phosphate derivative is ammonium polyphosphate (APP). For instance, as APP crystal phase I APP may be preferred, as it is more soluble in water than other APPs such as crystal phase II APP.

Component b) is aluminum hydroxide, which has the formula Al(OH)₃. Commercially available aluminum hydroxide may be used. Aluminum hydroxide confers smoke-suppressant properties to the formulation. Furthermore, the smoke-suppressant effect of the formulation has been found to be enhanced by the clay also present in the formulation, due to a synergistic effect between aluminum hydroxide and clays as described herein, by improving the intumescence of aluminum hydroxide. Furthermore, aluminum hydroxide has also been found to considerably improve the water resistance properties of, e.g., boards derived from wood treated with a formulation as described herein, reducing the swelling of the board, notably improving the dimensional stability of the products derived from wood. In particular, without being bound to any theory, he presence of aluminum hydroxide may compensate the naturally hygroscopic properties of phosphate salts.

Aluminum hydroxide is present in a formulation as described herein in an amount from 1 to 45 wt.%, and may be particularly present in an amount from 2 to 40 wt.%, more in particular from 3 to 35 wt.%, yet more in particular from 5 to 30 wt.%, even more in particular from 10 to 25 wt.%.

It has been surprisingly found that smoke-suppression may be increased with the reduction of the weight ratio of component a) with respect to component b). Accordingly, in several embodiments, the weight ratio of component a) to component b) may be of at most 3:1, in particular from 3:1 to 1:1, more in particular from 2:1 to 1:1, more in particular of about 1:1.

Component c) is a clay. The clay may preferably be a mineral of the group of the phyllosilicates characterized by having two-dimensional layers of silicon and oxygen tetrahedrons and layers of octahedrons of aluminum and/or magnesium oxides, water may also be included and/or occluded in the structure. The organization of these tetrahedral and octahedral layers and the composition thereof, give rise to the different clayish minerals. Such clays are typically used as in beds for cats, as fillers or as additives to modify rheological properties of fluids. For instance, a clay may be selected from magnesium silicate, aluminum silicate and magnesium aluminum silicate.

It has also been surprisingly found that a clay contributes to the stability of formulations as described herein. Furthermore, they have been found to advantageously contribute to the fire-resistant and smoke-suppressant properties of the formulation, acting synergistically with aluminum hydroxide.

The clay may be commercially available.

The clay may be an unmodified clay, a modified clay (e.g., modified with silanes or with phosphates) or mixtures thereof. Modified clays may advantageously further increase the stability of the formulation. A modified clay may particularly be a silane-modified clay.

The clay is present in an amount from 0.1 to 5.0 wt.% and may be particularly present in an amount from 0.5 to 3.0 wt. %, more in particular from 1.0 to 2.0 wt%. Such amounts advantageously may contribute to obtain formulations with good stability and may favour the synergistic effects with aluminum hydroxide with respect to fire-resistance. Higher amounts may detrimentally affect the fluidity of the formulation (e.g., in the form of a dispersion) and increase its viscosity, which may ultimately hamper the application of the formulation onto a cellulosic substrate and reduce the penetrability and wettability of the formulation on a cellulosic substrate.

Component d) is a surfactant selected from non-ionic surfactants or anionic surfactants. The surfactant is present in an amount from 0.01 to 10 wt.%, and may be particularly present in an amount from 0.1 to 5.0 wt.% more in particular from 0.5 to 3.0 wt.%.

The presence of a clay as described herein enables the formation of a stable formulation, in particular a dispersion, as described herein with such relatively low amounts of surfactants. This advantageously may reduce the costs of the formulations.

Furthermore, surfactants decrease the surface tension of the formulation (e.g., a dispersion) allowing to improve the penetration of the components (MAP, DAP and/or APP) of the formulation into the pores of cellulosic substrates (e.g., wood) towards the interior of the same. This, has been found to further improve the flame-retardant properties of cellulosic materials comprising the same.

Non-ionic surfactants are surfactants that do not bear an electrical charge. Although they do not contain an ionic group as their hydrophilic component, hydrophilic properties are conferred on them by the presence of a number of oxygen atoms in one part of the molecule which are capable of forming hydrogen bonds with molecules of water.

Non-ionic surfactants may be selected from long chain alcohols (e.g., fatty alcohols such as cetyl alcohol, stearyl alcohol, cetostearyl alcohol, and oleyl alcohol), alcohol ethoxylates, polyglycol ethers, polyoxyethylene alkyl ethers, secondary alcohol ethoxylates, polyoxyethylene alkyl ethers, polyalkyl glycol alkyl ethers (e.g., polyethylene and polypropylene glycol alkyl ethers), glucoside alkyl ethers, polyethylene glycol alkylphenyl ethers or glycerol alkyl esters. As a mode of example, the non-ionic surfactant may be a secondary ethoxylated alcohol, in particular, with CAS no. 84133-50-6 with 9 mole of ethylene oxide.

Anionic surfactants are surfactants that contain anionic functional groups at their hydrophilic head.

Anionic surfactants may be selected from alkyl sulfates (e.g. ammonium lauryl sulfate, sodium lauryl sulfate (SLS), sodium dodecyl sulfate (SDS), alkyl-ether sulfates (e.g. sodium lauryl ether sulfate (SLES), and sodium myreth sulfate), dioctyl sodium sulfosuccinate (DOSS), aryl sulfonates (e.g. sodium poly(naphthaleneformaldehyde)sulfonate also referred to as 2-naphthalenesulfonic acid sodium salt or sodium naphthalene sulfonate formaldehyde condensate CAS no. 36290-04-7), perfluoroalkyl sulfonates (e.g. perfluorooctanesulfonate (PFOS), perfluorobutanesulfonate), alkyl-aryl ether phosphates and alkyl ether phosphates.

Anionic surfactants may be preferred. In particular, 2-naphthalenesulfonic acid sodium salt (e.g., with CAS no. 36290-04-7) may be used as anionic surfactant.

It has also been found that the presence of the surfactant component contributes to the penetration of the phosphate derivative components dissolved in the formulation into the cellulosic material to which they are applied, which contributes to confer fire-resistance properties deep in the cellulosic material.

The weight percentages of each component a), b) c) and d), are based on the total combined weight amount of components a), b), c), and d).

Since a formulation as described may typically be a water-based dispersion, the components a), b), c) and d) will be typically dispersed in water. Generally, component a) may be dissolved in water (e.g., up to its maximum solubility), and the remaining components will be dispersed in water.

A formulation as described herein has:
i) a solids content from 50 to 75 wt.%, based on the total weight of the formulation.

The solids content is defined as the amount of non-volatile matter contained in a formulation.

The solids content may be known by knowing the amounts of the different components present in the formulation. The solids content may also be determined by methods known in the art, e.g., according to ISO 8190:1992, which is a gravimetric method that requires drying a sample to a temperature of 105 °C.

A formulation as described herein has high solids content, in particular, a solids content from 50 to 75 wt.%, based on the total weight of the formulation. More in particular, the solids content may be from 55 to 70 wt.% and more in particular from 60 to 65 wt.%.

As described above, the solids content of a water-based formulation as described herein also defines the amount of water of the formulation. Generally, a formulation as described herein has from 25 to 50 wt.% of water, based on the total weight of formulation, in particular from 30 to 45 wt.% of water and more in particular from 35 to 40 wt.% of water.

A combination of components of formulations as described herein have been generally found to be stable whilst at the same time advantageously having a high solids content as described herein. For instance, a formulation as described herein, e.g., a dispersion, generally does not form creams nor separates into distinct phases within an indicated timeframe. Such stability makes such formulations particularly suitable for industrial applicability. For example, the stability may be determined by e.g., by storing a formulation, in particular a dispersion, at a specific temperature (e.g., at 25 °C), and visually inspect the stability of the formulation with time. A formulation without observable phase separation is regarded as stable. For instance, a formulation, such as a dispersion, may be considered to be stable if the phase separation is less than 3% of the volume of the formulation. A formulation, in particular a dispersion, as described herein has a stability of at least 2 months at 25°C, in particular of at least 4 months, at least 5 months, are least 6 months and more in particular of at least a year. A formulation, e.g., a dispersion, with stability as described herein is particularly useful as the formulation can be stored and/or transported before its application for, e.g., at least two months.

As indicated above a formulation as described herein may typically be in the form of a dispersion.

In particular, a formulation as described herein may be a dispersion having a Sauter mean diameter from 0.5 to 3 microns.

The Sauter mean diameter, also designated in the art as D(3,2), D32 or D(32), is defined as the mean diameter with the same ratio of volume to surface area as the entire ensemble and it is measured by determining the size of the particles inside a dispersion using the absorption/scattering of light, relying on the fact that absorption/scattering is proportional to the surface area of the particles in the dispersion. In particular, the Sauter mean diameter may be determined by methods known in the art such as ISO13320:2020, which is directed to a particle size analysis based on Dynamic light scattering (DLS)

A dispersion as disclosed herein has a Sauter mean diameter from 0.5 to 3 microns, in particular from 1 to 2 microns.

Dispersions with such Sauter mean diameters advantageously have a size of solid particles (of aluminum hydroxide and clay) which allow them to remain on the surface of the cellulosic material treated, as they do not go deep in the pore of the cellulosic material, which further contributes to the synergistic effect of both substances in increasing fire resistance of the cellulosic material.

Formulations as described herein have also been found to be sprayable with a droplet size of less than 3 microns, in particular less 2 microns, in less than 1.5 microns. This droplet size advantageously improves distribution of the formulation components on the cellulosic material to be treated with the formulation.

A formulation as described herein may additionally comprise a metal oxide, in particular iron oxide (iron III oxide), particularly in the form of finely divided solid particles. A metal oxide, and iron oxide in particular, has been surprisingly found to further contribute to the stability of the formulation (e.g., in the form of a dispersion). If present, the formulation may comprise from 0.1 to 5 wt.% of metal oxide, in particular iron oxide, based on the total combined amount of components a), b), c), and d), in particular from 1 to 3 wt.%. A metal oxide such iron oxide may also provide coloration to the formulation, which may be particularly useful in some applications such as the use of the water-based flame-retardant and smoke suppressant formulation or methods thereof for the management of wildland fires described in more detail below.

A formulation as described herein may have a pH of, e.g., from 5.0 to 9.0. In several embodiments the pH may be from 5.5 to 9.0, in particular from 6.0 to 8.0. Such pHs advantageously may further contribute to the stability of the formulation.

Optionally, in order help to obtaining a pH within a desired range a pH modifier may be used. For instance, in several embodiments a formulation, e.g., a dispersion, as described herein may comprise a pH modifier. As will be understood by a person skilled in the art, in the context of the instant application refers to any compound that allows to change the pH of the formulation to arrive to a targeted pH. Accordingly, the pH modifier of choice will depend on the starting pH and the target pH, which can be easily determined by a skilled person. For example, if the pH is to be increased, the pH modifier of choice will be an alkali, whereas if the pH is to be decreased the pH modifier will be an acid. In formulations as described herein the pH modifier may typically be an alkali and may be selected from, e.g., ethanolamines such as diethanolamine, monoethanolamine, and/or triethanolamine; sodium hydroxide, and ammonium salts.

Suitable pH modifiers may preferably include, e.g., monoethanolamine, diethanolamine, triethanolamine, in particular embodiments the pH modifier may be diethanolamine. An appropriate amount of pH modifier may depend on the starting pH and the desired pH. As a mode of example, the formulation may comprise from 1 to 10 wt.% of pH modifier based on the total combined amount of components a), b), c), and d), in particular from 3 to 6 wt.%.

If desired, formulations as described herein may comprise melamine. Melamine may be used for instance to improve the mechanical and water resistance properties of the cellulosic-material treated as further contributing to flame-retardant effect of the formulation for being a flame-retardant in itself, due to its high nitrogen content.

For instance, although not necessary the presence of melamine may be desired if the formulation, e.g., in the form of a dispersion, is to be used in its final application in combination with a melamine urea formaldehyde (MUF) resin. In particular embodiments, if present in the formulation, melamine may react with the MUF resin and improve the mechanical properties and water resistance of a cellulosic material treated with a formulation as described herein in combination with a MUF resin.

If present, a formulation as described herein may comprise from 1 to 15 wt.% of melamine based on the total combined weight amount of components a), b), c), and d), in particular from 5 to 10 wt.%. However, melamine is a reactive component and it may compromise the stability of the formulation. Accordingly, it may be preferred for the formulation not to include melamine.

In several embodiments, if desired a formulation as described herein may comprise preservatives, such antioxidants (e.g., sodium benzoate, ferric and ferrous salts, such as pyrophosphates, orthophosphates, oxalates, ammonium oxalates, citrates, ammonium citrates, sulfates, ammonium sulfates, bromide, iodide, acetate, stearate, oleate, gluconate, fumarate) and biocides (e.g., biocides selected from 5-chloro-2-methylisothiazol-3(2H)-One (CMIT) 2-methylisothiazol-3(2H)-One (MIT), 1,2-benzisoyhiazol-3(2H)-one (BIT) (CAS No. 2634-33-5), 2-bromo-2-nitro-1,3-propanediol also known as bronopol (CAS No. 52-51-7), (ethylenedioxy)dimethanol (EGF) (CAS No. 3586-55-8), and mixtures thereof. Sodium benzoate and biocides are commercially available. For instance, suitable biocides including mixtures of these components may be obtained from TROY under the names of Mergal LA, Mergal V684K, Mergal 721 K3, Mergal 758. For instance, in several embodiments a biocide may be a combination of CMIT/MIT and bronopol, such as Mergal LA.

In several embodiments the formulation may preferably comprise sodium benzoate as preservative.

If present preservatives may be in a total amount from 0.01 to 10 wt.%, based on the total combined weight amount of components a), b), c), and d), in particular from 0.05 to 5 wt.%.

If desired a formulation as described herein may comprise additional components, e.g., which may contribute to the fire-retardant properties, smoke-suppressant properties and/or to the stability of the formulation. For instance, such additional components may include zinc borate and/or magnesium hydroxide (Mg(OH)₂) which may further contribute to the fire-retardant and smoke-suppressant properties of the formulation when combined with aluminum hydroxide also present in the formulation. If used zinc borate may be used in any suitable form, for instance, as 2ZnO.3B₂O₃.3.5H₂O (CAS No 138265-88-0), 2ZnO.3B₂O₃ (CAS No 1338265-88-0), 4ZnO.B₂O₃.H₂O (CAS No 149749-62-2), 4ZnO.6B₂O₃.7H₂O (CAS No 1332-07-6), 2ZnO.2B₂O₃.3H₂O (CAS No 1332-07-6) or a combination thereof. However, such additional components are not necessary. Thus, in several embodiments components other than those specified above are not present.

In several embodiments a formulation as described herein consists of components a), b), c), d), water, and, optionally, a metal oxide (e.g., iron oxide), a pH modifier (e.g., ethanolamines, in particular diethanolamine), melamine and/or a preservative (e.g., sodium benzoate). In several particular embodiments a formulation as described herein consists of components a), b), c), d), water, a metal oxide (e.g., iron oxide), a pH modifier (e.g., ethanolamines, in particular diethanolamine) and a preservative (e.g., sodium benzoate). In yet other particular embodiments a formulation as described herein consists of components a), b), c), d), water, a metal oxide (e.g., iron oxide), and a preservative (e.g., sodium benzoate).ln several embodiments a formulation as described herein consists of components a), b), c), d) and water. In several additional embodiments a formulation as described herein consists of components a), b), c), d), water and optionally iron oxide, a pH modifier, and/or melamine. In several additional embodiments, a formulation as described herein consists of components a), b), c), d), iron oxide, and water.

Formulations as described herein provide the desired properties without any boric acid or borax derivative content. Borax is the trade name of disodium bicyclo[3.3.1]tetraboroxane-3,7-bis(olate) (IUPAC name of the chemical with the CAS number: 1330-43-4, with molecular formula: Na₂B₄O₇) also known as boron salt. It is a low-hardness white crystal that dissolves rapidly in water. Borax and boric acid have been used as a flame-retardants in cellulosic materials A problem with borax and boric acid is that the ECHA has classified both substances as SVHC (Substance of Very High Concern) and therefore they are subject to restrictions of use and authorization by the ECHA (European Chemicals Agency). Thus, formulations as described herein advantageously may be formulated not to comprise boric acid or borax derivative.

The instant invention further relates to a method for preparing a water-based flame-retardant formulation as described herein.

Such method comprises: A) adding to and mixing in water a phosphate derivative (a) selected from monoammonium phosphate (MAP), diammonium phosphate (DAP) and ammonium polyphosphate (APP), to provide a solution of the phosphate derivative in water.

Phosphate derivatives are soluble in water and may be dissolved by simply mixing the phosphate derivative in water by methods known in the art, e.g., in high shear mixers, such as agitators, dispersers, emulsifiers, colloid mills, homogenizers, rotor-stator systems.

A method as described herein further comprises: B) adding to and mixing in the solution of the phosphate derivative in water a clay (b); aluminum hydroxide (c); and a surfactant (d) selected from non-ionic and ionic surfactants wherein mixing is performed under high-shear, to provide the water-based flame-retardant formulation.

High-shear mixing is known in the art. For instance, high-shear mixing may be performed in, e.g., a disperser, a colloid mill, a rotor-stator system or a homogenizer. For instance, when mixing is performed in a disperser a peripheral speed of, e.g., at least 18 m/s may be used. When mixing is performed in a colloid mill a rotator speed of, e.g., at least 30000 RPM may be used.

The different components of the formulation (b), (c) and (d) may be added and mixed in any order.

It has been found that the clay (b) may be added and mixed in two or more stages (e.g., in 3, 4 or even 5 stages). In particular embodiments, in a first stage 25-75% of the total weight amount of the clay used to prepare the formulation may be added and mixed to the phosphate derivative solution and the remaining 75-25 % of the total weight amount of the clay used to prepare the formulation may be added and mixed in a second or further stage(s). In a yet particular embodiment, 50% of the total amount of clay of the formulation may be added and mixed to the phosphate derivative solution and the remaining 50 % of the clay may be added and mixed at a later second stage.

Adding and mixing the clay in two or more stages has been found to facilitate the dispersion of the clay. Without being bound to any theory it is believed that the use of several stages may facilitate exfoliation of the clay and at the same time increase its interaction with other components such as the aluminum hydroxide.

In several embodiments in step B) component b) may be added and mixed to solution of the phosphate derivative in water, subsequently component c) may be added and mixed, and finally component d) may be added and mixed.

Step B) of a method as described herein may particularly comprise:
i) adding and mixing to the solution of the phosphate derivative, 25-75 wt.%, in particular 50 wt.% of the total weight amount of the clay used to prepare the formulation, to provide a first dispersion;
ii) adding and mixing to the first dispersion, the aluminum hydroxide to provide a second dispersion;
iii) adding and mixing to the second dispersion the remaining 25-75 wt.%, in particular 50 wt.%, of the total weight amount of the clay used to prepare the formulation, to provide a third dispersion;
iv) adding and mixing to the third dispersion the surfactant, to provide a fourth dispersion,
wherein mixing is performed under high-shear, to provide the water-based flame-retardant formulation in the form of a dispersion.

Additional components that may be present in the formulation, e.g., a metal oxide (e.g., iron oxide), a pH modifier (e.g., ethanolamines, in particular diethanolamine), melamine and/or a preservative (e.g., sodium benzoate) may be mixed with components a), b), c) and d) in any order. In several embodiments, if used a metal oxide may be mixed in step B, e.g., after adding the clay, more in particular in step B) iii). In several embodiments, if used, melamine may be mixed in step B, e.g., after or in replacement of all or part of aluminum hydroxide, more in particular in step B) ii). If used a pH modifier and/or a preservative may be mixed in at the end, in particular after step B) iv).

The instant invention further relates to a process for manufacturing a cellulosic material comprising applying a formulation as described herein onto a cellulosic substrate.

Suitable cellulosic substrates may be selected from wood (e.g., wood fibers, wood chips, solid wood or wood veneer), cellulose fibers, and flax.

A formulation as described herein may be applied onto a cellulosic substrate by methods known in the art. For instance, the formulation (e.g., in the form of a dispersion) may be applied by spraying or injecting formulation onto the cellulosic substrate or by immersing the cellulosic substrate in the formulation. Other methods known in the art may also be used such as roller coating, brush coating or curtain coating.

In a method as described herein the formulation may be applied to an amount from 5 to 30 wt.% of the solids content weight of the formulation over the weight of dry cellulosic substrate (also known in the art as wt.% dry/dry), in particular to an amount from 10 to 25 wt.%. Such amounts of formulation have been found to advantageously improve the fire properties (e.g., flame propagation and smoke generation) of the cellulosic substrate.

The process may typically include a drying step to allow water of the formulation to evaporate.

A process for manufacturing a cellulosic material may further comprise applying a resin onto the cellulosic substrate prior to, simultaneous to or after applying the formulation. If a resin is applied the formulation (e.g., in the form of a dispersion) may also be mixed into the resin prior to the application to the cellulosic substrate, and the formulation and the resin are then applied simultaneously onto the cellulosic substrate. If a resin is applied, it may be preferred to apply the resin after applying the formulation.

Suitable resins may be selected from aminoplast resins (e.g., urea formaldehyde (UF) resin and/or melamine urea formaldehyde (MUF) resin), phenol formaldehyde resins, epoxy resins, acrylic resins, and biobased resins such as lignin resins, tannin resins or soya resins, or mixtures thereof. A specific resin may be selected depending on the application as known to a skilled person.

The resin may also be applied by methods known in the art depending on the cellulosic material being prepared.

The cellulosic material prepared may be selected from chipboard, OSB board, fiber board, wooden board, plywood, veneered board or laminated veneer lumber (LVL), cross-laminated timber (CLT). In particular the cellulosic material may preferably be fiber board and may be selected from medium-density fiber (MDF) board or high-density fiber (HDF) board.

The process for manufacturing such cellulosic materials correspond to processes typically used in the art with the exception that a formulation as described herein is also applied onto the cellulosic substrate.

As a mode of example, a fiber board, e.g., MDF or HDF, may be prepared from wood fiber by drying the wood fiber (e.g., to obtain a wood fiber with moisture content of 0.1 to 5 %, in particular from 0.5 to 2.5 %). The dry wood fiber is introduced in a glue-spreading machine. Firstly, the resin of choice (e.g., a resin selected from UF, MUF or phenol formaldehyde resin) with any additives of choice (e.g., paraffin, catalysts, formaldehyde scavengers, release agents, biocides and another additives) is sprayed onto the dry wood fibers under rotation of the fibers so as to keep the wood fibers separated therein and to enable the spraying of the fibers. Secondly, a formulation as described herein may be continuously sprayed on the wood fiber provided with the resin (also referred to as the glued fiber), keeping the glued fibers in continuous movement inside the glue-spreading machine.

Once the wood fiber was glued, a "mat" may be formed with pneumatic air conveyance (although other methods may also be used), such that the glued fibers are introduced in a parallelepiped box with a base of desired dimensions. In the lower part, the box may be provided with a mesh to allow the passage of air and prevents the exit of glued wood fiber. Once the mat is formed, it may be removed from the box and pressed at room temperature (e.g., for at least 1 minute, in particular for 2 to 30 minutes, at a pressure from 0.3 to 1 MPa) to remove the air and for the subsequent hot-pressing step to be more effective. The pre-pressed mat may then be removed under cold conditions and introduced in the hot press. The temperature of the press plate may be of e.g., 100 to 300°C, in particular from 150 to 250 °C, more in particular from 175 to 225 °C, and at a pressure from 0.4 to 5.0 MPa for a length of time from 1 to 20 seconds, in particular from 5 to 15 seconds per mm of total thickness of the board being formed. The boards are then taken out of the press, and are left to cool until room temperature is reached, e.g., at least 24 hours.

As a mode of example, a plywood may be obtained from an uneven number of wood veneers and the number of wood veneers and the nature of the wood will vary depending on the wishes for the final products. As a mode of example, the number of wood veneers may vary from 2 to 30, in particular from 3 to 15 and more in particular from 5 to 10 and the thickness of the wood veneers may be from 0.3 to 3 mm, in particular from 0.5 to 2.5 mm, more in particular from 1 to 2 mm.

A process for manufacturing plywood may generally comprise placing a first wood veneer in a conveyor belt, with the wood grain on a first direction, to allow the wood veneer to pass through a curtain of an adhesive or under rolls applying an adhesive.

Application of adhesive to a cellulose substrate, e.g., a wood veneer, can be achieved by means of, e.g., a roller coater, a curtain coater, a spray coater and liquid and foam extruders.

Using roller coaters, both sides of the veneer are coated. The rollers may be corrugated to control the spread of the adhesive. Curtain coaters apply adhesive in a thin film or curtain of adhesive to one side of the cellulosic substrate as it passes through the coater. Spray coaters use air sprays to atomize the adhesive and apply a thin film of the adhesive onto one side of the substrate. Liquid and foam extruders apply beads or rods of adhesive to the substrate surface which coalesce to form a complete covering of adhesive during the pressing process.

Typically, adhesives comprising a resin selected from, e.g., UF, MUF or phenol formaldehyde, epoxy resins, acrylic resins, and biobased resins such as lignin resins, tannin resins or soya resins may be used. A subsequent wood veneer may then be placed with the wood grain of the wood on the opposite direction to that first direction. Subsequent wood veneers are placed alternatively with the wood grain on the first direction and the wood grain on the opposite direction. The wood veneers are then placed on top of each other to provide a stack of wood veneers wherein adjacent wood veneers have the wood grain in opposite directions and with the surface of the wood veneer which is free of adhesive being placed on top of the surface containing adhesive of a previous wood veneer, until the last wood veneer is to be placed to obtain a stack of wood veneers of desired thickness. The last wood veneer to be placed on the stack is free of any adhesive.

The stack of wood veneers may be pressed at a temperature from 80 to 160°C, in particular from 90 to 150°C and more in particular from 100 to 140°C, and at a pressure from 0.4 to 2.0 MPa for a length of time from 0.4 to 3 minutes per mm of total thickness of the substrate being pressed.

The stack of wood veneers may be directly submitted to such conditions or may have been submitted to a previous compression step wherein the stack of veneers is subjected to a pressure from 0.3 to 1 MPa, for 2 to 30 minutes at room temperature (e.g. at a temperature from 16 to 26 °C). Such previous compression step may advantageously prevent drying out of the resin and improve adhesion, particularly if compression cannot be performed immediately after stacking.

A formulation as described herein may be used to pre-treat wood veneers or may be mixed into the adhesive prior to the application of the adhesive to the wood veneers. In particular embodiments, wood veneers may be pre-treated with the formulation and be allowed to dry to evaporate the water of the formulation prior to the application of the adhesive. Drying may be carried out to achieve, e.g., a humidity of the wood veneers of, e.g., 6-14 wt.% of weight of water based on the total weight of the wood veneer, prior to application of the adhesive.

The instant invention further relates to a cellulosic material obtained by or obtainable by a process as described herein. Specific product characteristics defined for the method apply to the cellulosic material obtained by or obtainable by the method.

Accordingly, the instant invention further relates to a cellulosic material comprising a cellulosic substrate and a formulation as described herein. The cellulosic material comprising the formulation is understood to encompass both wet cellulosic materials, wherein the formulation has been applied to the cellulosic materials and water is still present, and dry cellulosic materials, wherein the cellulosic material has been allowed to dry after the application of the formulation and where water may have evaporated to various degrees.

In line with the description of the above process of preparation, a cellulosic material as described herein may comprise 5 to 30 wt.% of the solids content weight of the formulation over the weight of dry cellulosic substrate (also known in the art as wt.% dry/dry), in particular from 10 to 25 wt.%.

In line with the description of the above process of preparation, a cellulosic material as described herein may further comprise a resin selected from, e.g., aminoplast resins (e.g., UF and/or MUF), phenol formaldehyde resins, epoxy resins, acrylic resins, and biobased resins such as lignin resins, tannin resins or soya resins.

Cellulosic materials as described herein, particularly obtained by or obtainable by a process as also described herein, may have a fire class C or B and smoke production class S2 or S1 according to the European standard EN 13501-1:2007+A1:2010.

Additionally, or alternatively, cellulosic materials as described herein, particularly obtained by or obtainable by a process as also described herein, may have an M1 fire-resistance rating according to the Spanish standard UNE 23-721-90 or the equivalent French standard NF P92-501.

Additionally, or alternatively, cellulosic materials as described herein, particularly obtained by or obtainable by a process as also described herein, may have a fire class C or B and smoke production class S2 or S1 according to ISO 5660-1:2015.

Additionally, or alternatively, cellulosic materials as described herein, particularly obtained by or obtainable by a process as also described herein, may have smoke-suppressant properties according to ISO 5659-2:2017 characterized by
- a Ds4 of less than 250, in particular of less than 200 and more in particular of less than 150; and/or
- a VOF4 of less than 500, in particular less than 400 and more in particular less than 300.

The Ds4 is the smoke density at four minutes and the VOF4 is integral of the smoke density curve over time (Ds(t)) calculated from t=0 to t=4 minutes.

These standards determine the classification of a tested material under specific conditions. Accordingly, a material can comply with one or more classifications, and even with all classifications. In the following paragraphs the different standards are explained in more detail.

The standard EN 13501-1:2007+A1:2010 refers to the Euroclass system under which the European Union (EU) developed a classification of the reaction of construction products to fire for industrial samples of minimum dimensions of 1500X1000 mm. The EN 13501-1:2007+A1:2010 standard includes a classification system for construction products where testing methods are also defined, according to which the classification is determined as shown in Table 1 below.

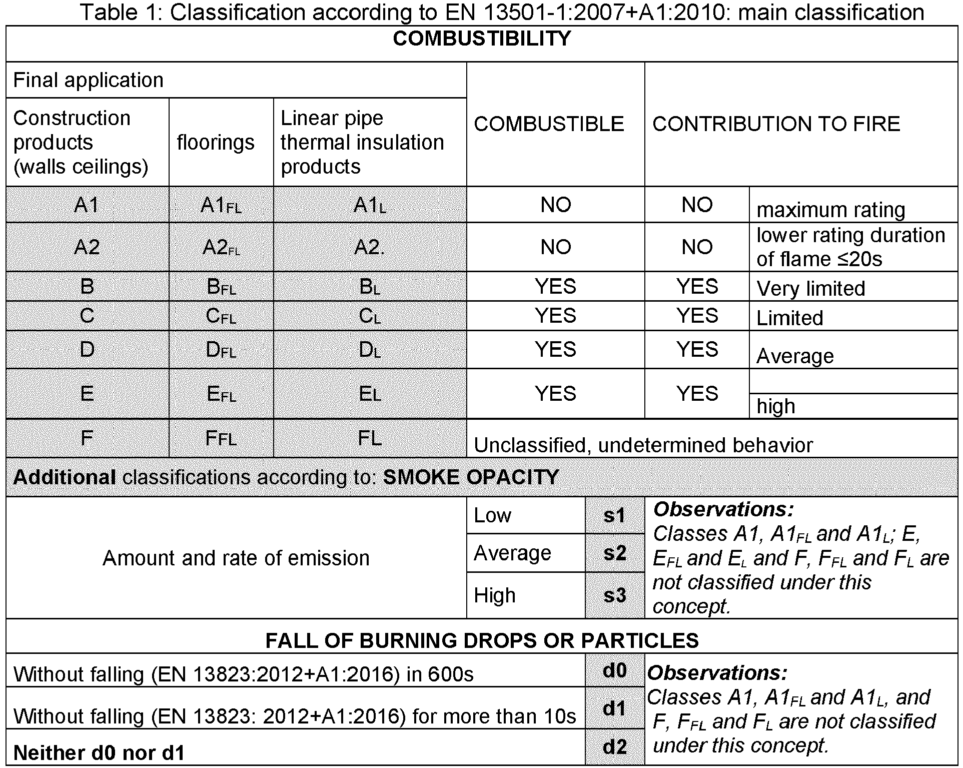

Thus, the classes stipulated under Euroclass standard EN 13501-1:2007+A1:2010 are classified in A1, A2, B, C, D, E, F, which conceptually correspond with the following definitions:
- A1: Non-combustible. Without maximum level of contribution to the fire.
- A2: Non-combustible. Without minimum level of contribution to the fire.
- B: Combustible. Very limited contribution to the fire.
- C: Combustible. Limited contribution to the fire.
- D: Combustible. Medium contribution to the fire.
- E: Combustible. High contribution to the fire.
- F: Unclassified

Likewise, in the tests, it is also possible to consider the following additional classifications:
- Smoke opacity, s (smoke) referred to as S1, S2, S3, for low, medium or high smoke opacity (it incorporates the concepts of rate of spread and total smoke production).
- Fall of burning drops or particles, d (drop) referred to as d0, d1, d2, for nil, medium or high falling of burning drops or particles.

Lastly, the classification depends not only on the fire behavior of materials, but also on the manner in which they are placed on the supports, because the tests for one and the same material on different final applications may yield different classifications. Consequently, materials can also be classified according to their final application. The classification of materials for walls and ceilings will not have a subscript; floors will have the subscript FL (floor), and the classification for linear pipe insulation products will have the subscript L (line).

The classification is performed under EN 13501-1:2007+A1:2010 based on results obtained using one or more of 5 harmonized test methods described in the European classification standard EN 13501-1:2007+A1:2010.
* EN ISO 1182: Non-combustibility test.
* EN ISO 1716: Determination of the gross heat of combustion.
* EN 13823:2012+A1:2016 Thermal attack of a single burning item (SBI).
* EN ISO 9239-1: Determination of the burning behavior of flooring products using a radiant heat source.
*EN ISO 11925-2:2011: Ignitability of products subjected to direct impingement of the flame. Single-flame source test.

For instance, for products with B and C fire and S2 or S1 classes according to EN 13501-1:2007+A1:2010; EN 13823:2012+A1:2016 and EN ISO 11925-2:2011 tests are used. EN 13823:2012+A1:2016 tests also allow to determine fire resistant and smoke production classes. In table 2, classes of reaction to fire performance for construction products excluding floorings are presented together with the corresponding tests used for their characterization. The abbreviations of classification parameters are explained in the text, indicating the type of tests used.

**Table 2: Classes and test methods according to EN 13501-1:2007+A1:2010**

| Class | Test method(s) | Classification criteria | Additional classification |
|---|---|---|---|
| A1 | EN ISO 1182⁽¹⁾; *and* | ΔT ≤ 30 °C; and Δm ≤ 50 %; and t_{f} = 0 (i.e. no sustained flaming) | - |
| | EN ISO 1716 | PCS ≤ 2.0 MJ/kg ⁽¹⁾; and PCS ≤ 2.0 MJ/kg ^{(2) (2a)}; and PCS ≤ 1.4 MJ/m^{2 (3)}; and PCS ≤ 2.0 MJ/kg ⁽⁴⁾ | |
| A2 | EN ISO 1182(1); *or* | ΔT ≤ 50 °C; and - Δm ≤ 50 %; and t_{f} ≤ 20 s | Smoke production⁽⁵⁾; *and* Flaming droplets/particles⁽⁶⁾ |
| | EN ISO 1716; *and* | PCS ≤ 3.0 MJ/kg ⁽¹⁾; and PCS ≤ 4.0 MJ/m^{2 (2)}; and PCS ≤ 4.0 MJ/m^{2 (3)}; and PCS ≤ 3.0 MJ/kq ⁽⁴⁾ | |
| | EN 13823 (SBI) | FIGRA ≤ 120 W/s; and LFS < edge of specimen; and THR₆₀₀ₛ ≤ 7.5 MJ | |
| B | EN 13823 (SBI); *and* | FIGRA ≤ 120 W/s; and LFS < edge of specimen; and THR₆₀₀ₛ ≤ 7.5 MJ | Smoke production⁽⁵⁾; *and* Flaming droplets/particles⁽⁶⁾ |
| | EN ISO 11925-2⁽⁸⁾: *Exposure* = *30 s* | Fₛ ≤ 150 mm within 60 s | |
| C | EN 13823 (SBI); *and* | FIGRA ≤ 250 W/s; and LFS < edge of specimen; and THR₆₀₀ₛ ≤ 15 MJ | Smoke production⁽⁵⁾; *and* Flaming droplets/particles⁽⁶⁾ |
| | EN ISO 11925-2⁽⁸⁾: *Exposure* = *30 s* | Fₛ ≤ 150 mm within 60 s | |
| D | EN 13823 (SBI); *and* | FIGRA ≤ 750 W/s | Smoke production⁽⁵⁾; *and* Flaming droplets/particles⁽⁶⁾ |
| | EN ISO 11925-2⁽⁸⁾: *Exposure* = *30 s* | Fₛ ≤ 150 mm within 60 s | |
| E | EN ISO 11925-2⁽⁸⁾: *Exposure* = *15 s* | Fₛ ≤ 150 mm within 20 s | Flaming droplets/particles⁽⁷⁾ |
| F | No performance determined | | |
| (1) For homogeneous products and substantial components of non-homogeneous products. | | | |
| (2) For any external non-substantial component of non-homogeneous products. | | | |
| (2a) Alternatively, any external non-substantial component having a PCS ≤ 2.0 MJ/m², provided that the product satisfies the following criteria of EN 13823 (SBI): FIGRA ≤ 20 W/s; *and* LFS < edge of specimen; and THR₆₀₀ₛ < 4.0 MJ; *and* s1; *and* d0. | | | |
| (3) For any internal non-substantial component of non-homogeneous products. | | | |
| (4) For the product as a whole | | | |
| (5) **s1** = SMOGRA ≤ 30 m²/s² *and* TSP₆₀₀ₛ ≤ 50m²; **s2** = SMOGRA ≤ 180 m²/s² *and* TSP₆₀₀ₛ ≤ 200 m²; **s3** = not s1 or s2. | | | |
| (6) **d0** = No flaming droplets/particles in EN 13823 (SBI) within 600 s; **d1** = No naming droplets/ particles persisting longer than 10 s in EN 13823 (SBI) within 600 s; **d2** =not d0 or d1. Ignition of the paper in EN ISO 11925-2 results in a d2 classification. | | | |
| (7) Pass = no ignition of the paper (no classification); Fail = ignition of the paper (**d2** classification) | | | |
| (8) Under conditions of surface flame attack and, if appropriate to the end-use application of the product, edge flame attack. | | | |

Cellulosic substrates may typically have a fire class D with regards to combustibility and a smoke production class S3. With formulations and methods as described herein cellulosic materials can be obtained with a fire class C or B and smoke production class S2 or S1 according to EN 13501-1:2007+A1:2010.

Accordingly, materials as described herein, particularly obtained by or obtainable by a process as also described herein, may have a fire class C or B and smoke production class S2 or S1 according to the European standard EN 13501-1:2007+A1:2010. In particular, materials as described herein may have a fire class C and a smoke production class S2, or a fire class B and a smoke production class S2, or even a fire class B and a smoke production class S1 according to the European standard EN 13501-1:2007+A1:2010.

The standard UNE 23-721-90 or NF P92-501 relates to fire reaction tests for building materials using a radiation test applicable to rigid materials or the like (coating materials) of any thickness and flexible materials over 5 mm thick. Tests according to this standard are also commonly referred to in the art as epiradiator tests. Even though, this standard is obsolete, the tests described are still commonly used in the art in order to evaluate experimentally the fire resistance of the material and the ease of flame propagation.

Classifications of building materials according to standard UNE 23-721-90 or NF P92-501 are as follows:
M-0 for non-combustible materials
M-1 for combustible and non-flammable materials
M-2 for combustible and hardly flammable materials
M-3 for combustible and moderately flammable materials
M-4 for combustible and highly flammable materials

N.C. is the category for NON-CLASSIFIABLE materials, which have a rate of spread greater than 2 mm/sec. Materials with this name cannot be used in building.

Cellulosic substrates may typically have a M4 fire-resistance rating according to standard UNE 23-721-90. In contrast, cellulosic materials as described herein, particularly obtained by or obtainable by a process as also described herein, may have a M1 fire-resistance rating according to standard EN 23-721-90.

The Standard ISO 5660-1:2015 relates to reaction-to-fire tests, and in particular to the determination of the heat release rate (by a cone calorimeter method) and the smoke production rate (by dynamic measurement) for samples of a maximum dimensions of 100X100 mm.

Cellulosic substrates may typically have a fire class A with regards to combustibility and a smoke production class S3 according to ISO 5660-1:2015. With formulations and methods as described herein cellulosic materials can be obtained with a fire class C or B and smoke production class S2 or S1 according to ISO 5660-1:2015.

The standard ISO 5659-2:2017 relates to smoke generation classification by determination of the optical density by means of the single-chamber test for samples of maximum dimension of 100x100 mm. Even though this standard specifically relates to plastics, its methods are also typically used in the art to determine smoke generation parameters for other materials, such as cellulosic materials, by simply using a sample of a cellulosic material instead of a sample of a plastic material.

Important parameters measured and calculated:
- Dst (e.g. Ds4): the smoke density at a given time (e.g at 4 minutes)
- VOF4: Integral of the D_{S(t)} - curve calculated from t=0 to t=4 min.

Cellulosic substrates may typically have smoke-suppressant properties according to ISO 5659-2:2017 characterized by:
- a Ds4 (Ds at 4minutes) of more than 250, in particular of more than 500; and/or
- a VOF4 of more than 500, in particular more than 1000.

In contrast, cellulosic materials as described herein, particularly obtained by or obtainable by a process as also described herein, may have smoke-suppressant properties according to ISO 5659-2:2017 characterized by
- Ds4 (Ds at 4minutes) of less than 250, in particular of less than 200 and more in particular of less than 150; and/or
- a VOF4 of less than 500, in particular less than 400 and more in particular less than 300.

In view of the above, products and methods described herein, contribute to providing new solutions in the field of fire-proof formulations, which undoubtedly contribute to improving properties of cellulosic substrates against exposure to fire for construction products, such as composites derived from wood (e.g., plywood and MDF).

Formulations described herein have also been found to satisfactorily combine flame-retardant and smoke-suppression properties in a wildland environment which has been found useful for the management of wildland fires.

Accordingly, the present invention further relates to the use of a water-based flame-retardant and smoke-suppressant formulation as described herein for the management of wildland fires. The management of wildland fires is understood as any action taken for the prevention, control and/or extinction of fire in wildland vegetation, which in the context of the present description would involve the use of a water-based flame-retardant and smoke-suppressant formulation as described herein. Similarly, the present invention further relates to a method for the management of wildland fires comprising the use of a water-based flame-retardant and smoke-suppressant formulation as described herein.

The term wildland fire as used herein is an overarching term describing any non-structure fire that occurs in vegetation and natural fuels. A wildland may be understood as land that has not been urbanized or cultivated. Wildland vegetation may typically include forests (e.g., wild forests as well as managed forests). Wildland fire encompasses both wildfire and prescribed fire. A wildfire is an unplanned fire caused by lightning or other natural causes, by accidental (or arson-caused) human ignitions, or by an escaped prescribed fire. A prescribed fire is a planned fire intentionally ignited by, e.g., park managers to meet management objectives, e.g., in the prevention of wildfires or in assisting the control and/or extinction of wildfires.

A method for the management of wildland fires may comprise applying a water-based flame-retardant and smoke-suppressant formulation as described herein to wildland vegetation (e.g., a forest). The formulation may be applied as such (at a formulation to water ratio of 1:0) or diluted in water, e.g., at a formulation to water volume ratio from 4:1 to 1:10, in particular from 3:1 to 1:8, more in particular from 2:1 to 1:6, more in particular from 1:2 to 1:5, yet more in particular of about 1:4.

The formulation may be applied in a manner commonly used in the management of wildland fires. For instance, it may be applied to wildland vegetation aerially and/or from the ground. In several particular embodiments the formulation may be applied aerially. Optionally in addition to apply the formulation aerially it may also be applied from the ground. The application may be performed by methods known in the art. For instance, it may be applied aerially by dropping the formulation from a flying device (e.g., a plane, a hydroplane, a helicopter, or a drone), and it may be applied from the ground from a vehicle (e.g., from a fire truck or other suitable fire vehicles) or on foot (e.g., using a hose or an extinguishing backpack)

As a mode of example, the formulation or the formulation diluted in water (e.g., at a ratio as indicated above) may be applied at from 0.1 to 20 l/m², 0.3 to 15 l/m², 0.5 to 10 l/m², more in particular at from 1 to 2 l/m².

It has been surprisingly found that a formulation as described herein has good fire retardancy and smoke suppression as well as good adherence to wildland terrain and vegetation, in particular to trees and their leaves, and it has also been found to have good drop characteristics. Without being bound to any theory, the combination of components of the formulation and in particular the specific mixture of clay component and surfactants, is thought to provide a formulation with rheological properties of which positively contribute to the adherence and drop characteristics of the formulation. In this text, the term "comprises" and its derivations (such as "comprising", etc.) should not be understood in an excluding sense, that is, these terms should not be interpreted as excluding the possibility that what is described and defined may include further elements, steps, etc.

On the other hand, the invention is obviously not limited to the specific embodiment(s) described herein, but also encompasses any variations that may be considered by any person skilled in the art (for example, as regards the choice of materials, dimensions, components, configuration, etc.), within the general scope of the invention as defined in the claims.

### EXAMPLES

### EXAMPLE 1: Preparation of formulations

Five formulations (A, B, C, D and E) were prepared using the different components listed in Table 3, in the listed amounts. The clay used was a silane modified clay, the anionic surfactant use was 2-naphthalenesulfonic acid sodium salt (CAS no. 36290-04-7), the non-ionic surfactant was a secondary ethoxylated alcohol (CAS no. 84133-50-6 with 9 mole of ethylene oxide).

The formulations were prepared as follows:
- The phosphate derivative was dissolved of water in a Cowles dispersor, to provide a solution of the phosphate derivative in water.
- 50% of the amount of clay in the final formulation was added to the solution of the phosphate derivative and mixed under high-shear in a disperser using a peripheral speed of at least 18 m/s, to provide a first dispersion.
- Aluminum hydroxide was added and mixed to the first dispersion to provide a second dispersion under the same high shear conditions, to provide a second dispersion;
- the remaining 50 % of the amount of clay was added and mixed to the second dispersion under the same high shear conditions, to provide a third dispersion;
- the surfactant was added and mixed to the third dispersion under the same high shear conditions, to provide a fourth suspension,
- high-shear mixing is was maintained until the viscosity of the fourth dispersion was less than 1 Pa.s determined at 25 °C in a Brookfield DV2T viscometer, and the Ford No.4 cup time is below 60 s determined at 25 °C (as indicated in table 1 for each formulation), to provide the water-based flame-retardant formulations in the form of dispersions.
The properties of the formulations A-E obtained are listed in Table 2.

Formulations A, B and C were used to provide MDF boards as explained in Example 2 and the fire properties of MDF boards were evaluated and compared to boards treated with commercially available flame-retardants using standard UNE 23-721-90.

Formulations A, B and C were used to provide boards manufactured and tested in Example 3 by means of standard ISO 5659-2:2017 for smoke generation and compared to boards treated with commercially available flame-retardants.

Formulation C was used to provide boards manufactured and tested in Example 4 by means of standard ISO 5660-1:2015 and in Example 5 by means of standards UNE 23-721-90 (or NF P92-501), standard EN 13823:2012+A1:2016 and EN ISO 11925-2:2011 and classified by EN 13501-1:2007+A1:2010.

**Table 3:**

| Components (wt.%) | Formulation | | | | |
|---|---|---|---|---|---|
| | A | B | C | D | E |
| monoammonium phosphate (MAP) | 20.0 | 18.0 | - | - | - |
| diammonium phosphate (DAP) | 30.0 | 27.0 | - | - | - |
| ammonium polyphosphate (APP) | - | - | 39.6 | 30.0 | 45.0 |
| aluminum hydroxide | - | 20.0 | 25.0 | 10.0 | 20.0 |
| Clay | - | 2.0 | 2.5 | 0.2 | 1.5 |
| Non-ionic surfactant | 0.1 | 0.5 | 0.3 | 1.5 | 0.1 |
| Anionic Surfactant | - | 0.5 | 0.5 | 3.5 | 0.5 |
| Iron oxide (III) | - | 0.5 | 0.6 | 0.1 | 0.5 |
| pH modifier (diethanolamine) | - | - | - | 10.0 | - |
| melamine | - | - | - | 10.0 | - |
| water | 49.9 | 31.5 | 31.54 | 34.9 | 32.5 |

**Table 4:**

| Property | Formulation | | | | |
|---|---|---|---|---|---|
| | A | B | C | D | E |
| Viscosity (Pa*s) | < 0.03 | 0.6 | 0.6 | 0.55 | 0.50 |
| Ford No.4 cup time | <60 s | <60 s | <60 s | <60 s | <60 s |
| pH | 6.3 | 6.3 | 6.2 | 8.2 | 6.2 |
| Solids Content (wt.%) | 50.1 | 68.5 | 68.5 | 65.1 | 67.6 |
| Sauter mean diameter (µm) | 1-2 | 1-2 | 1-2 | 1-2 | 1-2 |
| Stability | >1 year | >1 year | >1 year | >4 months | >5 months |

Methods used for the characterization of the formulations:
- Viscosity: determined at 25°C in a Brookfield DV2T viscometer
- Ford No.4 cup time: determined at 25°C by DIN 53211
- Solids Content: ISO 8190:1992 Determination of moisture content using a gravimetric method by drying at 105 °C
- Sauter mean diameter: ISO13320:2020 by particle size analysis using Dynamic light scattering (DLS)
- Stability: at temperature of 25 ° C by visual inspection.

### EXAMPLE 2: Preparation of MDF boards and fire resistance of the boards

MDF boards were manufactured with Formulations A, B and C of Example 1 and with commercial fire-retardants (reference in the sector of fire-proofing agents for boards derived from wood).

The boards prepared were tested by according to standard UNE 23-721-90: Fire reaction tests for building materials. Radiation test applicable to rigid materials or the like (coating materials) of any thickness and flexible materials over 5 mm thick.

This fire resistance test of this Example 2 is colloquially known by persons skilled in the art as the epiradiator test.

MDF boards were manufactured using the following parameters as typically used in the art for manufacturing fire-proof boards:
- Plate press with a contact temperature of 200 °C on the surface of boards.
- Board dimensions: 200x200 mm
- Board thickness: 16 mm
- Wood fiber: Pinus pinaster. 550 kg dry fiber of wood/m³ board were used
- Melamine-urea formaldehyde resin: FORESA RES 2160 commercial resin. Dosage: 15 % dry resin/dry wood
- waterproofing: Commercial paraffin wax emulsion called FORESA WAX 2102. Dosage. 0.5 % dry wax/dry wood.
- Press factor: 9 s/mm (curing time in the hot press per mm of thickness of the board).
- Moisture content of the glued mat before pressing: 10 %

The flame-retardants used were:
- Formulation A according to Example 1 with a solids content of 50.1 wt.%
- Formulation B according to Example 1 with a solids content of 68.5 wt.%
- Formulation C according to Example 1 with a solids content of 68.5 wt.%
- Commercial product A, APP-based fire-resistant solution (without clay, without Al (OH)₃, and without surfactants) with a solids content of 50 wt.%.
- Commercial product B, APP-based fire-resistant solution containing borate compounds (without clay, without Al(OH)₃, and without surfactants) with a solids content of 70 wt.%.

The dosages of the three products were adjusted to a 10 wt.% of dry fire-retardant over dry wood fiber.

By way of explanation, although it is known to one skilled in the state of the art, the method for manufacturing the series of boards that were subjected to the fire resistance test according to UNE 23-721-90 was performed as follows:
Wood fiber was dried in a forced hot air dryer at 140 °C. 570 g of dry fiber with 2 % moisture content weighed on a scale was introduced in a glue-spreading machine.

133.6 g of MUF resin (FORESA RES 2160) were weighed and 4.8 g of FORESA WAX 2102 paraffin emulsion were added under stirring to achieve a good mixing. Then the mixture was adjusted with water depending on the solid content of fire-retardant that is to be used, the mixture of the chemical compounds, including the fire-retardant must not exceed a 10 % moisture content so as to prevent the formation of vapor locks during pressing and poor degassing, leading to a board with characteristics that are not apt for the marketing of such board.

In the case of the fire-retardant, the following amounts are weighed:
1) Formulation A from Table1 of Example 1: 113.8 g (50.1 % solids).
2) Formulation B from Table1 of Example 1: 83.2 g (68.5 % solids).
3) Formulation C from Table1 of Example 1: 83.2 g (68.5 % solids).
4) Commercial product A: 114 g (50 % solids).
5) Commercial product B: 81.4 g (70 % solids).

The method of mixing the resin and paraffin emulsion and the fire-retardant is performed by spraying with air guns inside the chamber of the glue-spreading machine while rotating so as to keep the wood fibers separated therein and to enable the spraying of the fibers.

Firstly, the resin and paraffin emulsion mixture was sprayed, for an optimal spray with the aforementioned amounts, continuous spraying was performed for more than 30 seconds and less than 1 minute.

Secondly, fire-proofing Formulation A, B or C was continuously sprayed on the glued fiber by means of pneumatic guns for more than 30 seconds and less than 1 minute, keeping the glued fibers in continuous movement inside the glue-spreading machine.

Once the wood fiber was glued, a "mat" was formed with pneumatic air conveyance (although other methods may also be used), such that the glued fibers were introduced in a parallelepiped box with a base of 200x200 mm and a height sufficient for storing all the glued fiber from the test. In the lower part, the box was provided with a mesh which allows the passage of air and prevents the exit of glued wood fiber.

Once the mat was formed, it was removed from the box and pressed at room temperature for at least 1 minute to remove the air and for the subsequent hot-pressing step to be more effective.

The pre-pressed mat was then removed under cold conditions and introduced in the hot press. The temperature of the plate was established at a set point of 200 °C. The curing factor (pressing time) applied in all the manufactured boards was 9 s/mm.

Once the boards were taken out of the press, they were left to cool until room temperature was reached, at least 24 hours.

The boards were then sanded to remove the surfaced burned due to the high temperatures of the press, until a final thickness of the boards of 16 mm was achieved.

Once the boards were sanded, they were introduced in a climatic chamber to stabilize the board at a given temperature and humidity of 20 °C and 65 % according to EN 13986:2004+A1:2015 Wood-based panels for use in construction - Characteristics, evaluation of conformity and marking.

The results obtained in the epiradiator test according to standard UNE 23-721-90: Fire reaction tests for building materials. Radiation test applicable to rigid materials or the like (coating materials) of any thickness and flexible materials over 5 mm thick; are shown in the following table (Table 5):

**Table 5: Results according to standard UNE 23-721-90 (epiradiator test)**

| Fire-retardant used | Classification of MDF board | Observations |
|---|---|---|
| Formulation A | M1 | Without flame for the entire test lasting 20 minutes |
| Formulation B | M1 | Without flame for the entire test lasting 20 minutes |
| Formulation C | M1 | Without flame for the entire test lasting 20 minutes |
| Commercial product A | M3 | Flame appears after 55 seconds of the test |
| Commercial product B | M3 | Board burns with a green flame |

As can be observed in the preceding table, an MDF board manufactured with Formulation A, or with Formulations B or C according to the invention achieves classification M1, whereas comparative boards manufactured commercial products, obtained under the same controlled technological board manufacturing conditions achieved classification M3, which indicates worse fire-resistance.

Accordingly, whereas a dose of 10 % dry/dry (10 g of solid content of the formulation per 100 g of dry wood) is sufficient to achieve an M1 fire resistance rating according to standard UNE 23-721-90 for formulations Band C according to the invention, with the same dose boards manufactured with commercial fire retardants could only achieve an M3 classification.

### EXAMPLE 3: Smoke generation of MDF boards

MDF boards obtained with Formulations A, B and C according to Example 1 were tested for smoke generation.

In particular, boards were manufactured and tested for smoke generation by means of standard ISO 5659-2:2017.

The MDF boards were manufactured as described above for Example 2.

The test for smoke generation involved the determination of the optical density by means of the single-chamber test.

The main parameters of the test according to standard ISO 5659-2:2017 for testing the manufactured boards were:
Smoke chamber test conditions:
   - Radiation applied: 50 kW/m².
   - Distance between sample surface and radiation source: 25 mm.
   - Size of the samples: 75x75 mm.
Important parameters measured and calculated:
   - D_{S}4 (D_{S} at 4 minutes).
   - VOF4: Integral of the D_{S(t)} - curve calculated from t=0 to t=4 min.
   - Total Smoke Production (TSP): Sum of the smoke released from the ignition.

**Table 6: Results according to standard ISO 5659-2:2017 smoke chamber test)**

| Flame-retardant | TSP (240 s) | TSP (600 s) | TSP (1200 s) | D_{S} 4 (adimensional) | VOF4 |
|---|---|---|---|---|---|
| Formulation A | 689.1 | 2762.4 | 7184.8 | 298.16 | 694.11 |
| Formulation B | 238.2 | 1797.1 | 5251.1 | 136.46 | 252.69 |
| Formulation C | 125.0 | 1354.5 | 5936.5 | 56.99 | 136.83 |

As is clearly reflected in the preceding results table, Formulations B and C applied at a dosage of 10 % dry formulation/dry wood for manufacturing MDF-type boards derived from wood dramatically improves the results in regard to the reduction of smoke compared with Formulation A (even if this formulation also passed the epiradiator test with classification M1).

This demonstrates that the incorporation of aluminum trihydroxide and clay causes a synergistic smoke reduction effect in formulations with derivatives of phosphorus (MAP, DAP, APP) which are stabilized in the formulations object of the present invention.

### EXAMPLE 4: fire resistant properties of industrial MDF boards treated with formulation C of example 1 compared to MDF boards using a smoke suppressant separately from a fire-retardant

MDF boards were tested according to the standard ISO 5660-1:2015.

### Example 4.1: MDF board treated with smoke supressant and a fire-retardant used separately

Components used for the preparation of the MDF boards:
- Fire-retardant: aqueous solution with a 50% solids content, 20% MAP (CAS No. 7722-76-1) and 30% DAP (CAS no.: 7783-28-0).
- Smoke-supressant: Al(OH)₃ used as micronized powder.
- No clay is used.
- Adhesive: RES 2260 commercially available from FORESA INDUSTRIAS QUIMICAS DEL NOROESTE, S.A.U
- Paraffin: WAX 2102 fabricada por la empresa FORESA INDUSTRIAS QUÍMICAS DEL NOROESTE, S.A.U

Board parameters for example 4.1
- Board dimension 500x500 mm
- Plate temperature: 200°C
- Press factor: 9 s/mm.
- Thickness (after pressing): 19.1-19.3 mm.
- Final density (after pressing): 715-745 kg/m³.
- Adhesive amount: 17 wt% (dry/dry)
- Paraffin emulsion amount: 0.4 wt.% (dry/dry)
- Flame-retardant amount 12 wt.% (dry/dry)
- Smoke retardant amount: 5 wt.% (dry/dry)

### Example 4.2: MDF board treated with formulation C of Example 1

Components used for the preparation of the MDF boards:
- Fire-retardant + smoke supressant: formulation C of Example 1
- Adhesive: RES 2260 commercially available from FORESA INDUSTRIAS QUÍMICAS DEL NOROESTE, S.A.U
- Paraffin: WAX 2102 fabricada por la empresa FORESA INDUSTRIAS QUÍMICAS DEL NOROESTE, S.A.U

Board parameters for example 4.2
- Board dimension 500x500 mm
- Plate temperature: 200 °C
- Press factor: 9 s/mm.
- Thickness (after pressing): 19.1-19:3 mm.
- Final density (after pressing): 715-745 kg/m³.
- Adhesive amount: 17 wt% (dry/dry)
- Paraffin emulsion amount: 0.4 wt.% (dry/dry)
- Formulation C of example 1 amount: 12 wt.% (dry/dry)

Fire test results: The boards of examples 4.1 and 4.2 were tested according to standards ISO 5660-1:2015. The results obtained are summarized in the following table.

**Table 7: Results according to standard ISO 5660-1:2015**

| Measured parametres | Units | Example 4.1 Fire retardant separate from smoke suppressant | Example 4.2 Formulation C of example 1 | % improvement Experiment N° 2 vs Experiment N°1 |
|---|---|---|---|---|
| Total heat release | MJ/m² | 87.78 | 81.83 | 6.8 % |
| Total smoke | m²/m² | 187.35 | 41.57 | 77.8 % |
| MAHRE | Kw/m² | 73.68 | 70.80 | 3.9 % |
| Test time | s | 1947 | 1949 | - |
| Smoke - classification | - | S2 | S1 | S2 → S1 |
| Total heat release | MJ | 9.5 | 9.1 | 4.2 % |
| FIGRA02 | W/s | 219.7 | 178.6 | 18.7 % |
| FIGRA04 | W/s | | | |
| heat release classification | - | C | C | - |

As can it can be seen from the data provided in the previous table, better results have been achieved by applying formulation C of example 1 to a 12 wt.% (dry/dry) dosage (Example 4.2) compared to a dosage of a total of 15 wt.% (dry/dry) of fire-retardant and smoke suppressant agents on dry wood fiber (applying separately 10wt.% (dry/dry) of fire-retardant and 5wt.% (dry/dry) of smoke suppressants), in the manufacture of MDF-type wood-derived boards. This represents a 20% reduction in the weight amount of fire-retardant agents to obtain the same class C under ISO 5660-1: 2015.

The most significant improvement achieved with the formulation C of example 1, compared to the fire-retardant and the smoke-suppressant applied separately, is the total smoke (m² / m²), which goes from 187.35 m² / m² in the comparative example to only 41.57 m² / m² with the formulation C of Example 1, which means a reduction in this test of 77.8% smoke generation due to the synergistic effect of the formulation of the invention compared to the application of phosphate solution and aluminum hydroxide separately.

### EXAMPLE 5: Fire resistant properties of MDF industrial boards

This example shows the preparation of MDF industrial board panels using formulation C of example 1 and the evaluation of their fire-resistant properties according to norm NF P92-501 or UNE 23-721-90, according to norm EN 13501-1:2007+A1:2010 using tests EN 13823 :2012 +A1:2016 and EN ISO 11925-2:2011.

For the production of the MDF industrial panels, wood fibers were treated with the formulation C of example 1.

MDF fibers made by using a thermomechanical pulping (TMP) process.

The production of MDF was performed according to typical methods.

The fire-retarded MDF panels were manufactured in an industrial continuous hot press, the panels having the following characteristics:
- panels with three different thickness were made: 8 mm, 18 mm and 30 mm thick.
- Width: 2500 mm
- Length: 4920 mm
- Density: from 730 to 850 kg/m³.
- Press factor: from 9.0 to 10.5 s/mm
- Press pressure: < 5 MPa
- Resin dosage: 15 to 17 wt.% (dry resin/dry wood).
- Paraffin wax emulsion dosage: 1 to 2 wt.% (dry waterproofing emulsion/dry wood).
- Used Flame retardant and smoke suppressant formulation C dosage: 12 to 13.5 wt.% (dry formulation/dry wood).
- Used resin: Melamine-urea-formaldehyde having a 15 wt.% of melamine and molar ratio formaldehyde/NH₂ of 0.75.

The boards thus manufactured were tested on strength (Internal Bond test, according to EN319, expressed in MPa or N/mm²) and on formaldehyde content (perforator test according to EN 120 and expressed in mg of formaldehyde per 100 g of dry board), swelling (water resistance according to EN319) and on flame resistance (according to norm NF P92-501 or UNE 23-721-90). The boards were also tested on reaction to fire tests to obtain their classification under EN 13501-1:2007+A1:2010. The tests performed were the test on the ignitability of products subjected to direct impingement of flame. Part 2: Single-flame source test (according to norm EN ISO 11925-2:2011) and the reaction to fire tests for building products - building products excluding floorings exposed to the thermal attack by a single burning item (according to norm EN 13823:2012+A1: 2016).

The various panel boards with the fire resistance additive conformed to the commercial requirement, the main characteristic results of MDF thus manufactured were:
- Internal bond test: 0.6 to 1.2 N/mm².
- Formaldehyde content: < 3 mg of formaldehyde per 100 g of dry board
- Swelling: < 10 %

Numerical values obtained according to EN 13823:2012+A1:2016:
- Total heat release, THR₆₀₀ₛ: 1.2 to 1.8 MJ.
- Maximum of the quotient of heat release rate from the specimen, FIGRA_{0,2}: 17 to 20 W/s.
- Total smoke production, TSP₆₀₀ₛ: 61 to 75 m².
- Smoke growth rate, SMOGRA: 6 to 7 m²/s².
- Lateral flame spread on the long specimen wing, LFS: None in all test done.
- Falling of flaming drops: None in all test done.

Numerical values obtained according to norm EN ISO 11925-2:2011:
- Ignition: No in all test done.
- Vertical spread of flame upper 150 mm: No in all test done.
- Ignition of filter paper: No in all test done.
- white, grey, lacking and light smokes are observed.
- There wasn't any combustion persistence or ignition points after test.
- Specimens are carbonized by the flame in the flame application area.

Classification of fire resistant of MDF boards manufactured with the fire resistant and smoke suppressant formulation C:
- according to norm EN 13501-1:2007+A1:2010: **B, S2 and d0**
- according to norm NF P92-501 or UNE 23-721-90: **M1**

### EXAMPLE 6: Flame retardant effectiveness

Two formulations with the components and % amounts detailed in Table 8, were prepared as described above for Example 1, with the iron oxide being mixed after the clay and the preservative being added at the end of the preparation.

The formulations obtained were tested in order to determine their flame retardant effectiveness in a way that is indicative of the suitability of the formulation for wildland fire management.

**Table 8: Composition of the tested formulations**

| Components (wt.%) | Formulation | |
|---|---|---|
| | F | G |
| monoammonium phosphate (MAP) | 20.0 | - |
| diammonium phosphate (DAP) | 30.0 | - |
| ammonium polyphosphate (APP) | - | 60.0 |
| aluminum hydroxide | 1.0 | 1.0 |
| Clay | 1.5 | 2.0 |
| Non-ionic surfactant | 0.5 | 0.5 |
| Anionic Surfactant | 0.1 | 0.5 |
| Iron oxide (III) | 0.1 | 0.5 |
| Preservative (sodium benzoate) | 0.5 | 0.5 |
| water | 46.5 | 35.0 |
| Viscosity (Pa*s) | 0.2 | 0.60 |
| Ford No.4 cup time (s) | 25 | 40 |
| pH | 6.0 | 5.9 |
| Solids Content (wt.%) | 53.7 | 65 |
| Sauter mean diameter (µm) | 0.05 | 0.2 |

The effectiveness of Formulations F and G was determined by means of a test which is not intended to reproduce real fire conditions (both in terms of dimensions and energy released), but to analyze the effect that the application of the formulation has on the combustion of a forest fuel. The tested forest fuel was made up of needles from the leaves of a pine forest of *Pinus pinea.* The needles were conditioned in a chamber (temperature = 23 °C and relative humidity = 50%) until a moisture content of 9-10% was reached. The moisture content was determined by drying in an oven (100 °C), until constant weight, measured from of three samples of the fuel taken from the conditioning chamber immediately prior to the test.

The tested formulation was diluted in water to a proportion formulation to water of 1:4. The diluted formulation was applied to the forest fuel at a ratio of 1 l/m², using a fire extinguishing backpack. Some red coloration of the forest fuel was observed upon application of the formulation.

The following conditions or treatments were tested:
1. Part of the fuel was treated with the flame retardant dilution was left to stand for 15 minutes in the laboratory at room temperature and was subsequently kept at a constant temperature of 42± 2 °C: a) for 30 minutes or b) for 90 minutes.
2. Part of the fuel was treated with water without including any flame retardant as a reference and was left to stand for 15 minutes in the laboratory at room temperature and was subsequently kept at a constant temperature of 42± 2 °C: a) for 30 minutes or b) for 90 minutes.
3. Part of the fuel was left untreated and taken directly from the conditioning chamber.

The fuels were tested in a combustion table with gravimetric control, by means of a scale with a sensitivity of 1 g, which allowed the continuous recording of the weight on the table during the execution of the assay, allowing to determine any weight variation.

Each test was executed twice. The amount of fuel used in each test was of 700 g/m² of dry matter, homogeneously arranged along the combustion table. The fuel corresponding to the first 80 cm of the table "untreated area" was placed directly on the table and the fuel corresponding to the last 40 cm "treated area" was placed on a separate tray onto which the flame retardant dilution to be tested, or water in the case of the reference tests, was applied. The surface of the "untreated area" was of 80 cm x 70 cm and of the "treated area" of 40 cm x 70 cm.

The test started by igniting a line with a cotton wick soaked in alcohol. The time of the passage of the flame was recorded every 20 cm, and the flame height was estimated. The weight was recorded constantly. Once the combustion finalized, the weight remained constant. The weight of the residues of the untreated area and of the treated area was recorded separately. The test was also monitored visually.

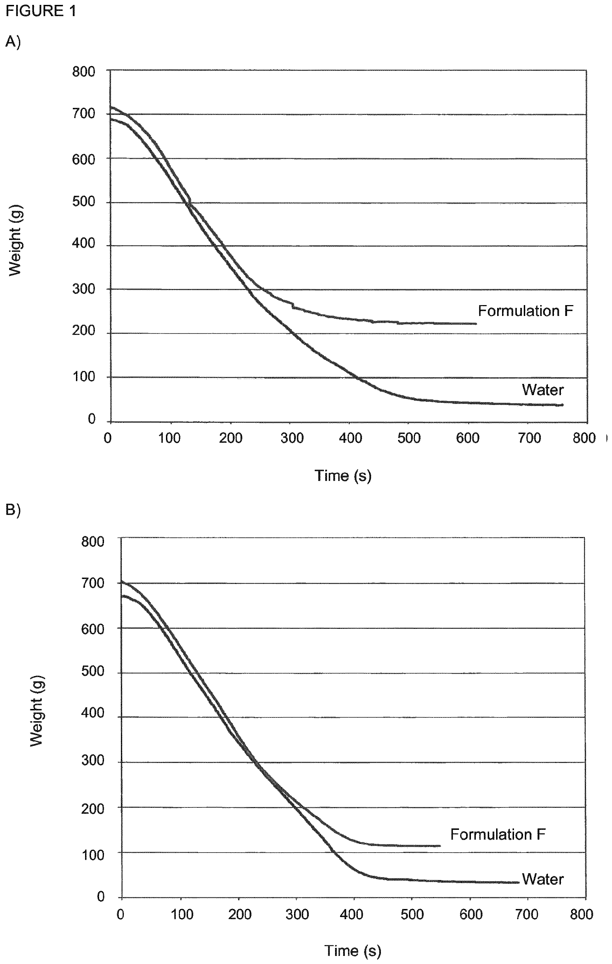

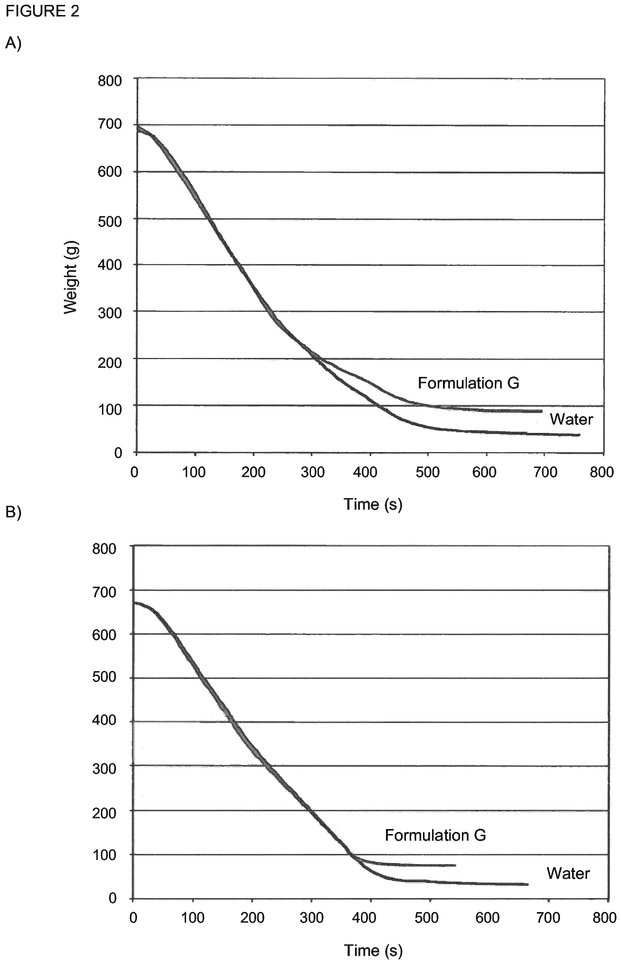

The recoded data provided a curve of weight variation with time during the assay. The curves obtained are shown in Figures 1 and 2 of the untreated fuel zones and fuel zones treated with Formulation F (Figure 1) or Formulation G (Figure 2) and with water after 30 minutes at 42 °C (A) and after 90 minutes at 42 °C (B). From the curves, the following phases could be observed: 1_Establishment of the stationary combustion regime. 2_Stationary combustion regime established in the untreated fuel zone, which is observed by a straight line. 3_Combustion in the treated fuel zone which is observed by a decrease of the slope of the straight line, by virtue of product efficiency.

**Table 9: Test results**

| | fire path length* (cm) | | flame height* (cm) | | flame propagation speed* (cm/s) | | % Weight Consumed*** | |
|---|---|---|---|---|---|---|---|---|
| Formulation | F | G | F | G | F | G | F | G |
| Untreated area | 80 | 40 | 52 | 50 | 0.35 | 0.40 | - | - |
| Treated area: Formulation + 30 min at 42°C | 15 | 40 | 19 | 25 | 0.13 | 0.21 | 20% | 63% |
| Treated area: water + 30 min at 42°C | 40 | 40 | n.s.d.* * | n.s.d.** | n.s.d.** | n.s.d.** | 91% | 91% |
| Treated area: Formulation + 90 min at 42°C | 40 | 40 | 21 | 35 | 0.24 | 0.29 | 74% | 68 % |
| Treated area: water + 90 min at 42°C | 40 | 40 | n.s.d.* * | n.s.d.** | n.s.d.** | n.s.d.** | 94% | 94% |

| | | | | | | | | |
|---|---|---|---|---|---|---|---|---|
| *Average of the results obtained in two repetitions of the assay ** n.s.d.o. means no significant difference observed with respect to the untreated area *** % weight consumed calculated for the treated area corresponds to the weight measured at the end of the assay with respect to the weight of the corresponding treated area at the beginning of the assay. | | | | | | | | |

As it can be seen from the results obtained there is a significant decrease in the fire path length, flame height, and flame propagation speed when the fuel is treated with the tested formulation F when compared to the untreated fuel or with the fuel treated under the same conditions but with only water. The decrease observed was more significant after 30 minutes at 42°C than after 90 minutes at 42°C, but the positive effects of the tested formulation F could still be observed after the 90 minutes at 42°C. Even though the fire path length for the area treated with formulation G was the same as for the area treated with water, the other parameters (flame height, flame propagation speed and % of weight consumed) were significantly reduced with the formulation G.

## Claims

1. A water-based flame-retardant and smoke-suppressant formulation comprising water and:
a) from 40 to 98.89 wt.% of a phosphate derivative selected from monoammonium phosphate (MAP), diammonium phosphate (DAP) and ammonium polyphosphate (APP);
b) from 1 to 45 wt.% of aluminum hydroxide
c) from 0.1 to 5 wt.% of a clay; and
d) from 0.01 to 10 wt.% of a surfactant selected from non-ionic surfactants and anionic surfactants,
the weight percentages of each component a), b), c) and d), based on the total combined weight amount of components a), b), c), and d), said formulation having a solids content from 50 to 75 wt.%, based on the total weight of the formulation.

2. The formulation of claim 1, wherein the formulation is a dispersion having a Sauter mean diameter from 0.5 to 3 microns, in particular from 1 to 2 microns.

3. The formulation of claim 1 or 2 wherein the phosphate derivative is a combination of MAP and DAP.

4. The formulation of claim 1 or 2 wherein the phosphate derivative is ammonium polyphosphate (APP).

5. The formulation of any one of claims 1-4 wherein the phosphate derivative is present in an amount from 50 to 94 wt.%, in particular from 60 to 93 wt.%, and more in particular from 80 to 90 wt.%.

6. The formulation of any one of claims 1-5, wherein non-ionic surfactants are selected from long chain alcohols (e.g. fatty alcohols such as cetyl alcohol, stearyl alcohol, cetostearyl alcohol, and oleyl alcohol), alcohol ethoxylates, polyglycol ethers, polyoxyethylene alkyl ethers, secondary alcohol ethoxylates, polyoxyethylene alkyl ethers, polyalkyl glycol alkyl ethers (e.g. polyethylene and polypropylene glycol alkyl ethers), glucoside alkyl ethers, polyethylene glycol alkylphenyl ethers or glycerol alkyl esters.

7. The formulation of any one of claims 1-6 wherein anionic surfactants are selected from alkyl sulfates (e.g. ammonium lauryl sulfate, sodium lauryl sulfate (SLS), sodium dodecyl sulfate (SDS), alkyl-ether sulfates (e.g. sodium lauryl ether sulfate (SLES), and sodium myreth sulfate), dioctyl sodium sulfosuccinate (DOSS), aryl sulfonates (e.g. sodium poly-(naphthaleneformaldehyde)sulfonate), perfluoroalkyl sulfonates (e.g. perfluoro-octanesulfonate (PFOS), perfluorobutanesulfonate), alkyl-aryl ether phosphates and alkyl ether phosphates.

8. The formulation of any one of claims 1-7 comprising iron oxide, in particular comprising from 0.1 to 5 wt.% of iron oxide, in particular from 1 to 3 wt.%, based on the total combined weight amount of components a), b), c), and d).

9. The formulation of any one of claims 1-8 further comprising from 1 to 15 wt.% of melamine in particular from 5 to 10 wt.%, based on the total combined weight amount of components a), b), c), and d).

10. The formulation of any one of claims 1-9 further comprising a pH modifier, in particular a pH modifier, selected from ethanolamines, such as diethanolamine, monoethanolamine and/or triethanolamine, sodium hydroxide, and ammonium salts, more in particular the pH modifier is diethanolamine; and/or a preservative selected from antioxidants and biocides, in particular the preservative is sodium benzoate.

11. A method for preparing a water-based flame-retardant formulation of any one of claims 1-10 comprising:
A) adding to and mixing in water a phosphate derivative (a) selected from monoammonium phosphate (MAP), diammonium phosphate (DAP) and ammonium polyphosphate (APP), to provide a solution of the phosphate derivative in water;
B) adding to and mixing in the solution of the phosphate derivative in water a clay (b); aluminum hydroxide (c); and a surfactant (d) selected from non-ionic and ionic surfactants, wherein mixing is performed under high-shear, to provide the water-based flame-retardant formulation.

12. The method of claim 11 wherein step B) comprises:
i) adding and mixing to the solution of the phosphate derivative, 25-75 wt.%, in particular 50 wt.%, of the total weight amount of the clay used to prepare the formulation, to provide a first dispersion;
ii) adding and mixing to the first dispersion, the aluminum hydroxide to provide a second dispersion;
iii) adding and mixing to the second dispersion the remaining 25-75 wt.%, in particular 50 wt.%, of the total weight amount of the clay used to prepare the formulation, to provide a third dispersion;
iv) adding and mixing to the third dispersion the surfactant, to provide a fourth dispersion, wherein mixing is performed under high-shear, to provide the water-based flame-retardant formulation in the form of a dispersion.

13. A process for manufacturing a cellulosic material comprising applying a formulation of any one of claims 1-10 onto a cellulosic substrate.

14. The process of claim 13, further comprising applying a resin onto the cellulosic substrate prior to, simultaneous to or after applying the formulation, in particular wherein the resin is selected from aminoplast resins (e.g. UF and/or MUF), phenol formaldehyde resins, epoxy resins, acrylic resins, and biobased resins such as lignin resins, tannin resins or soya resins.

15. The process of any one of claims 13-14, wherein the cellulosic substrate is selected from wood (e.g., wood fibers, wood chips, solid wood or wood veneer), cellulose fibers, and flax.

16. The process of any one of claims 13-15, wherein the cellulosic material is selected from chipboard, OSB board, fiber board (e.g. medium density fiber (MDF) board or high-density fiber (HDF) board), wooden board, plywood, veneered board or laminated veneer lumber (LVL), cross-laminated timber (CLT), in particular the cellulosic material is selected from medium density fiber (MDF) board or high-density fiber (HDF) board.

17. The process of any one of claims 13-17, wherein the formulation is applied by spraying or injecting the formulation onto the cellulosic substrate or by immersing the cellulosic substrate in the formulation.

18. The process of any one of claims 13-17, wherein the formulation is applied to an amount from 5 to 30 wt.%, in particular from 10 to 25 wt.%, of the solids content weight of the formulation over the weight of dry cellulosic substrate.

19. A cellulosic material obtainable by a process of any one of claims 13-18.

20. A cellulosic material comprising a cellulosic substrate and a formulation of any one of claims 1-10.

21. The cellulosic material of claim 19 or claim 20 comprising a resin selected from aminoplast resins (e.g., UF and/or MUF), phenol formaldehyde resins, epoxy resins, acrylic resins, and biobased resins such as lignin resins, tannin resins or soya resins.

22. The cellulosic material of any one of claims 19-21, comprising 5 to 30 wt.%, in particular from 10 to 25 wt.%, of the solids content weight of the formulation over the weight of dry cellulosic substrate.

23. The cellulosic material of any one of claims19-22, having: A) a fire class C or B and a smoke production class S2 or S1 according to the European standard EN 13501-1:2007+A1:2010, and/or B) an M1 fire-resistance rating according to standard UNE 23-721-90 or NF P92-501 and/or C) a fire class C or B and a smoke production class S2 or S1 according to ISO 5660-1:2015; and/or D) smoke-suppressant properties according to ISO 5659-2:2017 **characterized by**
- a Ds4 of less than 250, in particular of less than 200 and more in particular of less than 150; and/or
- a VOF4 of less than 500, in particular less than 400 and more in particular less than 300.

24. Use of a formulation of any one of claims 1-10 for the management of wildland fires.

25. A method for the management of wildland fires comprising applying a formulation of any one of claims 1-10 to wildland vegetation such as a forest, in particular, applying the formulation is performed aerially and/or from the ground, more in particular aerially.

## Patentansprüche

1. Eine flamm-hemmende und rauch-unterdrückende Formulierung auf Wasserbasis, umfassend Wasser und:
a) von 40 bis 98,89 Gew.-% eines Phosphatderivats, ausgewählt aus MonoammoniumPhosphat (MAP), Diammoniumphosphat (DAP) und Ammoniumpolyphosphat (APP),
b) von 1 bis 45 Gew.-% Aluminiumhydroxid;
c) von 0,1 bis 5 Gew.-% Tonerde, und
d) von 0,01 bis 10 Gew.-% eines Tensids, ausgewählt aus nicht-ionischen Tensiden und anionischen Tensiden,
die Gewichtsprozente jeder Komponente a), b), c) und d) basierend auf der Gesamtgewichtsmenge der Komponenten a), b), c) und d), wobei besagte Formulierung einen Feststoffgehalt von 50 bis 75 Gew.-% aufweist, bezogen auf das Gesamtgewicht der Formulierung.

2. Formulierung gemäß Anspruch 1, wobei die Formulierung eine Dispersion mit einem Sauter-Mittendurchmesser von 0,5 bis 3 Mikrometern, insbesondere von 1 bis 2 Mikrometern, ist.

3. Formulierung gemäß Anspruch 1 oder 2, wobei das Phosphatderivat eine Kombination aus MAP und DAP ist.

4. Formulierung gemäß Anspruch 1 oder 2, wobei das Phosphatderivat Ammoniumpolyphosphat (APP) ist.

5. Formulierung gemäß irgendeinem der Ansprüche 1 bis 4, wobei das Phosphatderivat in einer Menge von 50 bis 94 Gew.-%, bevorzugt von 60 bis 93 Gew.-%, und besonders bevorzugt von 80 bis 90 Gew.-% vorhanden ist.

6. Formulierung gemäß irgendeinem der Ansprüche 1 bis 5, wobei nicht-ionische Tenside ausgewählt sind aus langkettigen Alkoholen (z. B. Fettalkoholen wie Cetylalkohol, Stearylalkohol, Cetostearylalkohol und Oleylalkohol), Alkoholethoxylaten, Polyglykoläthern, Polyoxyethylenalkyläthern, sekundären Alkoholethoxylaten, Polyoxyethylenalkyläthern, Polyalkylglycolalkyläthern (z. B. Polyethylen- und Polypropylenglykolalkyläthern), Glucosidalkyläthem, Polyethylenglykolalkylphenyläthern oder Glycerinalkylestern.

7. Formulierung gemäß irgendeinem der Ansprüche 1 bis 6, wobei anionische Tenside ausgewählt sind aus Alkylsulfaten (z. B. Ammoniumlaurylsulfat, Natriumlaurylsulfat (SLS), Natriumdodecylsulfat (SDS), Alkyläthersulfaten (z. B. Natriumlauryläthersulfat (SLES) und Natriummyrethsulfat), Dioctylnatriumsulfosuccinat (DOSS), Arylsulfonaten (z. B. Natriumpoly-(Naphthalinformaldehyd)sulfonat), Perfluoralkylsulfonaten (z. B. Perfluoroctansulfonat (PFOS), Perfluorbutansulfonat), Alkylarylätherphosphaten und Alkylätherphosphaten.

8. Formulierung gemäß irgendeinem der Ansprüche 1 bis 7, umfassend Eisenoxid, insbesondere mit einem Gehalt von 0,1 bis 5 Gew.-% Eisenoxid, besonders bevorzugt von 1 bis 3 Gew.-%, bezogen auf die Gesamtgewichtsmenge der Komponenten a), b), c) und d).

9. Formulierung gemäß irgendeinem der Ansprüche 1 bis 8, ferner mit 1 bis 15 Gew.-% Melamin, insbesondere von 5 bis 10 Gew.-%, bezogen auf die Gesamtgewichtsmenge der Bestandteile a), b), c) und d).

10. Formulierung gemäß irgendeinem der Ansprüche 1 bis 9, ferner umfassend einen pH-Modifikator, insbesondere einen pH-Modifikator, ausgewählt aus Ethanolaminen, wie Diethanolamin, Monoethanolamin und/oder Triethanolamin, Natriumhydroxid und Ammoniumsalzen, bevorzugt wobei der pH-Modifikator Diethanolamin ist; und/oder ein Konservierungsmittel, das aus Antioxidantien und Bioziden ausgewählt ist, bevorzugt wobei das Konservierungsmittel Natriumbenzoat ist.

11. Verfahren zur Herstellung einer flamm-hemmenden Formulierung auf Wasserbasis gemäß irgendeinem der Ansprüche 1 bis 10, umfassend:
A) Hinzufügen von und Mischen in Wasser eines Phosphatderivats (a), ausgewählt aus Monoammoniumphosphat (MAP), Diammoniumphosphat (DAP) und Ammoniumpolyphosphat (APP), zur Bereitstellung einer Lösung des Phosphatderivats in Wasser;
B) Hinzufügen von und Mischen in die wässrige Phosphatderivat-Lösung von einer Tonerde (b); Aluminiumhydroxid (C); und einem Tensid (d), ausgewählt aus nicht-ionischen und ionischen Tensiden, wobei das Mischen unter hoher Scherung durchgeführt wird, um die wasserbasierte flamm-hemmende Formulierung bereitzustellen.

12. Verfahren gemäß Anspruch 11, wobei Schritt B) umfasst:
i) Hinzufügen und Mischen zu der Lösung des Phosphatderivats 25 bis 75 Gew.-%, insbesondere 50 Gew.-% der Gesamtgewichtsmenge der Tonerde, die zur Herstellung der Formulierung verwendet wird, um eine erste Dispersion bereitzustellen;
ii) Hinzufügen und Mischen des Aluminiumhydroxids zur ersten Dispersion, um eine zweite Dispersion bereitzustellen;
iii) Hinzufügen und Mischen zur zweiten Dispersion der restlichen 25-75 Gew.-%, insbesondere 50 Gew.-% der Gesamtgewichtsmenge der Tonerde, die zur Herstellung der Formulierung verwendet wurde, um eine dritte Dispersion bereitzustellen;
iv) Hinzufügen und Mischen des Tensids zu der dritten Dispersion, um eine vierte Dispersion bereitzustellen, wobei das Mischen unter hoher Scherung durchgeführt wird, um die wasserbasierte flamm-hemmende Formulierung in Form einer Dispersion bereitzustellen.

13. Verfahren zur Herstellung eines zellulosehaltigen Materials, umfassend die Anwendung einer Formulierung gemäß irgendeinem der Ansprüche 1 bis 10 auf ein zellulosehaltiges Substrat.

14. Verfahren gemäß Anspruch 13, ferner umfassend das Auftragen eines Harzes auf das zellulosehaltige Substrat vor, während oder nach der Anwednung der Formulierung, insbesondere wobei das Harz ausgewählt ist aus Aminoplastharzen (z. B. UF und/oder MUF), Phenolformaldehydharzen, Epoxidharzen, Acrylharzen und biobasierten Harzen, wie Ligninharzen, Tanninharzen oder Sojaharzen.

15. Verfahren gemäß irgendeinem der Ansprüche 13 bis 14, wobei das zellulosehaltige Substrat ausgewählt ist aus Holz (z.B. Holzfasern, Hackschnitzel, Massivholz oder Holzfurnier), Zellulosefasern und Flachs.

16. Verfahren gemäß irgendeinem der Ansprüche 13 bis 15, wobei das zellulosehaltige Material ausgewählt ist aus Spanplatten, OSB-Platten, Faserplatten (z. B. mitteldichte Faserplatten (MDF) oder hochdichte Faserplatten (HDF)), Holzplatten, Sperrholz, furnierte Platten oder furnierschichtiges Holz (LVL), grob-laminiertes Holz (CLT), insbesondere das zellulosehaltige Material ausgewählt wird aus mitteldichten Faserplatten (MDF) oder hochdichten Faserplatten (HDF).

17. Verfahren gemäß irgendeinem der Ansprüche 13 bis 17, wobei die Formulierung durch Sprühen oder Injizieren der Formulierung auf das zellulosehaltige Substrat oder durch Eintauchen des zellulosehaltigen Substrats in die Formulierung angewendet wird.

18. Verfahren gemäß irgendeinem der Ansprüche 13 bis 17, wobei die Formulierung in einer Menge von 5 bis 30 Gew.-%, insbesondere von 10 bis 25 Gew.-%, des Feststoffgehalts der Formulierung gegenüber dem Gewicht des trockenen zellulosehaltigen Substrats angewendet wird.

19. Ein zellulosehaltiges Material, erhältlich durch ein Verfahren gemäß irgendeinem der Ansprüche 13 bis 18.

20. Ein zellulosehaltiges Material, umfassend ein zellulosehaltiges Substrat und eine Formulierung gemäß irgendeinem der Ansprüche 1 bis 10.

21. Das zellulosehaltige Material gemäß Anspruch 19 oder Anspruch 20, umfassend ein Harz, ausgewählt aus Aminoplastenharzen (z. B. UF und/oder MUF), Phenolformaldehydharzen, Epoxidharzen, Acrylharzen und biobasierten Harzen, wie Ligninharzen, Tanninharzen oder Sojaharzen.

22. Das zellulosehaltige Material gemäß einem der Ansprüche 19 bis 21, umfassend 5 bis 30 Gew.-%, insbesondere 10 bis 25 Gew.-%, des Feststoffgehalts der Formulierung gegenüber dem Gewicht des trockenen zellulosehaltigen Substrats.

23. Das zellulosehaltige Material gemäß einem der Ansprüche 19 bis 22 mit
A) einer Brandklasse C oder B und einer Rauchentwicklungsklasse S2 oder S1 gemäß der Europäischen Norm EN 13501-1:2007+A1:2010, und/oder
B) einer Feuerwiderstandsklasse M1 gemäß der Norm UNE 23-721-90 oder NF P92-501 und/oder
C) einer Brandklasse C oder B und einer Rauchentwicklungsklasse S2 oder S1 gemäß ISO 5660-1:2015; und/oder
D) rauch-unterdrückenden Eigenschaften gemäß ISO 5659-2:2017, **gekennzeichnet durch**
- ein Ds4 von weniger als 250, insbesondere von weniger als 200, und mehr insbesondere von weniger als 150; und/oder
- ein VOF4 von weniger als 500, insbesondere von weniger als 400 und mehr insbesondere von weniger als 300.

24. Verwendung einer Formulierung gemäß irgendeinem der Ansprüche 1 bis 10 für die Bekämpfung von Waldbränden.

25. Verfahren zur Bekämpfung von Waldbränden, umfassend das Anwenden einer Formulierung gemäß irgendeinem der Ansprüche 1 bis 10 auf Wildlandvegetation, wie z. B. einen Wald, insbesondere das Auftragen der Formulierung aus der Luft und/oder vom Boden aus, insbesondere aus der Luft.

## Revendications

1. Formulation aqueuse ignifuge et antifumée comprenant de l'eau et :
a) 40 à 98,89 % en poids d'un dérivé phosphate choisi parmi le phosphate de monoammonium (MAP), le phosphate de diammonium (DAP) et le polyphosphate d'ammonium (APP) ;
b) 1 à 45 % en poids d'hydroxyde d'aluminium ;
c) 0,1 à 5 % en poids d'une argile ; et
d) 0,01 à 10 % en poids d'un tensioactif choisi parmi les tensioactifs non-ioniques et les tensioactifs anioniques,
les pourcentages en poids de chacun des composants a), b), c) et d) étant basés sur la quantité en poids combinée totale des composants a), b), c) et d), ladite formulation ayant une teneur en solides de 50 à 75 % en poids par rapport au poids total de la formulation.

2. Formulation selon la revendication 1, laquelle formulation est une dispersion ayant un diamètre moyen Sauter de 0,5 à 3 micromètres, en particulier de 1 à 2 micromètres.

3. Formulation selon la revendication 1 ou 2, dans laquelle le dérivé phosphate est une combinaison de MAP et de DAP.

4. Formulation selon la revendication 1 ou 2, dans laquelle le dérivé phosphate est le polyphosphate d'ammonium (APP).

5. Formulation selon l'une quelconque des revendications 1 à 4, dans laquelle le dérivé phosphate est présent en une quantité de 50 à 94 % en poids, en particulier de 60 à 93 % en poids, et plus particulièrement de 80 à 90 % en poids.

6. Formulation selon l'une quelconque des revendications 1 à 5, dans laquelle les tensioactifs non-ioniques sont choisis parmi les alcools à longue chaîne (par exemple les alcools gras tels que l'alcool cétylique, l'alcool stéarylique, l'alcool cétostéarylique, et l'alcool oléique), les alcools éthoxylés, les polyglycol-éthers, les alkyléthers de polyoxyéthylène, les alcools secondaires éthoxylés, les alkyléthers de polyoxyéthylène, les éthers alkyliques de polyalkylglycol (par exemple les éthers alkyliques de polyéthylène- et polypropylène-glycol), les éthers alkyliques de glucoside, les éthers alkylphényliques de polyéthylèneglycol ou les esters alkyliques de glycérol.

7. Formulation selon l'une quelconque des revendications 1 à 6, dans laquelle les tensioactifs anioniques sont choisis parmi les alkylsulfates (par exemple le laurylsulfate d'ammonium, le laurylsulfate de sodium (SLS), le dodécylsulfate de sodium (SDS)), les alkyléther-sulfates (par exemple le lauryléthersulfate de sodium (SLES) et le myreth-sulfate de sodium), le dioctylsulfosuccinate de sodium (DOSS), les arylsulfonates (par exemple le poly(naphtalèneformaldéhyde))sulfonate de sodium), les perfluoroalkylsulfonates (par exemple le perfluorooctanesulfonate (PFOS), perfluorobutanesulfonate), les alkyl-aryl-étherphosphates et les alkyl-étherphosphates.

8. Formulation selon l'une quelconque des revendications 1 à 7, comprenant de l'oxyde de fer, en particulier comprenant 0,1 à 5 % en poids, en particulier 1 à 3 % en poids d'oxyde de fer, par rapport à la quantité en poids combinée totale des composants a), b), c) et d).

9. Formulation selon l'une quelconque des revendications 1 à 8, comprenant en outre 1 à 15 %, en particulier 5 à 10 % en poids de mélamine, par rapport à la quantité en poids combinée totale des composants a), b), c) et d).

10. Formulation selon l'une quelconque des revendications 1 à 9, comprenant en outre un modificateur de pH, en particulier un modificateur de pH choisi parmi les éthanolamines telles que la diéthanolamine, la monoéthanolamine et/ou la triéthanolamine, l'hydroxyde de sodium, et les sels d'ammonium, plus particulièrement lequel modificateur de pH est la diéthanolamine ; et/ou un conservateur choisi parmi les antioxydants et les biocides, lequel conservateur est en particulier le benzoate de sodium.

11. Méthode pour préparer une formulation aqueuse ignifuge selon l'une quelconque des revendications 1 à 10, comprenant :
A) l'ajout à de l'eau et le mélange dans celle-ci d'un dérivé phosphate a) choisi parmi le phosphate de monoammonium (MAP), le phosphate de diammonium (DAP) et le polyphosphate d'ammonium (APP), pour former une solution du dérivé phosphate dans l'eau ;
B) l'ajout à la solution du dérivé phosphate dans l'eau et le mélange dans celle-ci d'une argile (b) ; d'hydroxyde d'ammonium (c) ; et d'un tensioactif (d) choisi parmi les tensioactifs non-ioniques et ioniques, le mélange étant effectué sous fort cisaillement, pour former la formulation aqueuse ignifuge.

12. Méthode selon la revendication 11, dans laquelle l'étape B) comprend :
i) l'ajout et le mélange, à la solution du dérivé phosphate, de 25 à 75 % en poids, en particulier de 50 % en poids de la quantité en poids total, de l'argile utilisée pour préparer la formulation, pour former une première dispersion ;
ii) l'ajout et le mélange, à la première dispersion, de l'hydroxyde d'aluminium pour former une deuxième dispersion ;
iii) l'ajout et le mélange, à la deuxième dispersion, des 25 à 75 % en poids, en particulier des 50 % en poids de la quantité en poids totale, qui restent de l'argile utilisée pour préparer la formulation, pour former une troisième dispersion ;
iv) l'addition et le mélange, à la troisième dispersion, du tensioactif pour former une quatrième dispersion, le mélange étant effectué sous fort cisaillement, pour former la formulation aqueuse ignifuge sous la forme d'une dispersion.

13. Procédé pour fabriquer un matériau cellulosique, comprenant l'application d'une formulation selon l'une quelconque des revendications 1 à 10 sur un substrat cellulosique.

14. Procédé selon la revendication 13, comprenant en outre l'application d'une résine sur le substrat cellulosique avant, en même temps que, ou après l'application de la formulation, en particulier dans lequel la résine est choisie parmi les résines aminoplastes (par exemple UF et/ou MUF), les résines de phénol-formaldéhyde, les résines époxy, les résines acryliques, et les résines biosourcées telles que les résines de lignine, les résines de tanin ou les résines de soja.

15. Procédé selon l'une quelconque des revendications 13 et 14, dans lequel le substrat cellulosique est choisi parmi le bois (par exemple fibres de bois, copeaux de bois, bois massif ou bois de placage), les fibres de cellulose, et le lin.

16. Procédé selon l'une quelconque des revendications 13 à 15, dans lequel le matériau cellulosique est choisi parmi les panneaux de particules, les panneaux à lamelles orientées (OSB), les panneaux de fibres (par exemple panneau de fibres moyenne densité (MDF) ou panneau de fibres haute densité (HDF)), les planches de bois, le contreplaqué, les panneaux plaqués ou le bois en placage stratifié (LVL), le bois lamellé-croisé (CLT), en particulier le matériau cellulosique est choisi parmi les panneaux de fibres moyenne densité (MDF) et les panneaux de fibres haute densité (HDF).

17. Procédé selon l'une quelconque des revendications 13 à 17, dans lequel la formulation est appliquée par pulvérisation ou injection de la formulation sur le substrat cellulosique ou par immersion du substrat cellulosique dans la formulation.

18. Procédé selon l'une quelconque des revendications 13 à 17, dans lequel la formulation est appliquée en une quantité de 5 à 30 % en poids, en particulier de 10 à 25 % en poids, du poids de la teneur en solides de la formulation par rapport au poids du substrat cellulosique sec.

19. Matériau cellulosique pouvant être obtenu par un procédé selon l'une quelconque des revendications 13 à 18.

20. Matériau cellulosique comprenant un substrat cellulosique et une formulation selon l'une quelconque des revendications 1 à 10.

21. Matériau cellulosique selon la revendication 19 ou la revendication 20, comprenant une résine choisie parmi les résines aminoplastes (par exemple UF et/ou MUF), les résines de phénol-formaldéhyde, les résines époxy, les résines acryliques, et les résines biosourcées telles que les résines de lignine, les résines de tanin ou les résines de soja.

22. Matériau cellulosique selon l'une quelconque des revendications 19 à 21, comprenant 5 à 30 % en poids, en particulier 10 à 25 % en poids, du poids de la teneur en solides de la formulation par rapport au poids du substrat cellulosique sec.

23. Matériau cellulosique selon l'une quelconque des revendications 19 à 22, ayant : A) une classe de feu C ou B et une classe de production de fumée S2 ou S1 conformément à la norme européenne EN 13501-1:2007+A1:2010, et/ou B) une note de résistance au feu M1 conformément à la norme UNE 23-721-90 ou NF P92-501, et/ou C) une classe de feu C ou B et une classe de production de fumée S2 ou S1 conformément à la norme ISO 5660-1:2015 ; et/ou D) des propriétés antifumée conformément à la norme ISO 5659-2:2017 **caractérisé par**
- une valeur Ds4 inférieure à 250, en particulier inférieure à 200 et plus particulièrement inférieure à 150 ; et/ou
- une valeur VOF4 inférieure à 500, en particulier inférieure à 400 et plus particulièrement inférieure à 300.

24. Utilisation d'une formulation selon l'une quelconque des revendications 1 à 10 pour la gestion des feux de végétation.

25. Méthode pour la gestion des feux de végétation, comprenant l'application d'une formulation selon l'une quelconque des revendications 1 à 10 à une végétation sauvage telle qu'une forêt, l'application de la formulation étant en particulier effectuée par voie aérienne et/ou depuis le sol, plus particulièrement par voie aérienne.
